(19) Europäisches Patentamt
European Patent Office
Office européen des brevets

(11) **EP 4 456 366 A1**

(12) **EUROPEAN PATENT APPLICATION**

(43) Date of publication:
**30.10.2024 Bulletin 2024/44**

(21) Application number: 24171260.3

(22) Date of filing: **19.04.2024**

(51) International Patent Classification (IPC):
*H02J 3/00* (2006.01)   *H02J 3/08* (2006.01)
*H02J 3/42* (2006.01)

(52) Cooperative Patent Classification (CPC):
**H02J 3/001; H02J 3/08; H02J 3/42**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.04.2023   CN 202310440077**

(71) Applicant: **Huawei Digital Power Technologies
Co., Ltd.
Shenzhen, Guangdong 518043 (CN)**

(72) Inventors:
• **CHENG, Jingling**
  **Shenzhen, Guangdong (CN)**
• **DONG, Mingxuan**
  **Shenzhen, Guangdong (CN)**
• **XIN, Kai**
  **Shenzhen, Guangdong (CN)**

(74) Representative: **Maiwald GmbH
Engineering
Elisenhof
Elisenstrasse 3
80335 München (DE)**

(54) **POWER SYSTEM AND METHOD FOR STARTING POWER SYSTEM**

(57)    This application provides a power system and a method for starting a power system. The power system includes a first alternating current bus, a plurality of alternating current power supply units, a plurality of switch units, and at least one controller. The controller is configured to: start a primary alternating current power supply unit to output an alternating current voltage to the first alternating current bus, control a secondary alternating current power supply unit to output an alternating current voltage in an open-circuit state, and control the secondary alternating current power supply unit to output a voltage to the first alternating current bus when a bus voltage value is greater than or equal to a second threshold and is still in a rise phase. The controller controls connection of the secondary alternating current power supply unit when the first alternating current bus is in the rise phase, to reduce a hardware requirement for a single alternating current power supply unit, and controls the alternating current voltage output in the open-circuit state, to avoid setting a platform period in which the bus voltage value remains unchanged. This can improve a black start speed of the power system without increasing hardware costs.

EP 4 456 366 A1

**Description**

**TECHNICAL FIELD**

This application relates to the field of power systems, and more specifically, to a power system and a method for starting a power system.

**BACKGROUND**

A process may be referred to as a black start process: When a power failure occurs within a range of a power system due to maintenance, a serious fault, or another reason, internal power supplying of the system is gradually recovered by using a synchronous generator set inside the system or another black-start power supply with a self-starting capability without relying on an external power supply, to implement stable operation of the system again.

At present, black start may be usually performed in two manners: synchronous black start and asynchronous black start. For example, if the synchronous black start manner is used, output ends of a plurality of black-start power supplies are connected in parallel before startup, a controller may send a black start command through broadcasting, and the plurality of black-start power supplies receive the black start command and begin to start. This black start manner requires the plurality of black-start power supplies to receive the black start command synchronously. This relies heavily on reliability of high-speed communication lines. If the asynchronous black start manner is used, one of asynchronous black start manners is as follows: One black-start power supply establishes a voltage of a system, and another black-start power supply is connected to the system after the system reaches a rated voltage. This manner requires that the black-start power supply that is first connected has a large device capacity and can independently bear black start load. As a result, hardware costs of black start of the system are increased. Another asynchronous black start manner is as follows: A platform period in which a voltage value of an alternating current bus remains unchanged is set, and a black-start power supply is connected in the platform period to establish a voltage of a system. This manner undoubtedly increases duration consumed for the black start.

Therefore, there is an urgent need for a power system and a method for starting a power system, to improve a start speed of the power system without increasing hardware costs.

**SUMMARY**

This application provides a power system and a method for starting a power system, to improve a start speed of the power system without increasing hardware costs.

According to a first aspect, a power system is provided. The power system includes a first alternating current bus, a plurality of alternating current power supply units, a plurality of switch units, and at least one controller. The plurality of alternating current power supply units are connected to the first alternating current bus by using the plurality of switch units respectively. The plurality of alternating current power supply units are configured to supply electric energy to the first alternating current bus. The plurality of alternating current power supply units include a primary alternating current power supply unit and at least one secondary alternating current power supply unit. The at least one controller is configured to start the primary alternating current power supply unit to output an alternating current voltage to the first alternating current bus when a switch unit connected to the primary alternating current power supply unit is in a switched-on state. The at least one controller is configured to start the secondary alternating current power supply unit to output an alternating current voltage in an open-circuit state when a switch unit connected to the secondary alternating current power supply unit is in a switched-off state, and a bus voltage value of the first alternating current bus is greater than or equal to a first threshold and is still in a rise phase. The at least one controller is configured to: when the bus voltage value of the first alternating current bus is greater than or equal to a second threshold and is still in the rise phase, control the switch unit connected to the at least one secondary alternating current power supply unit to enter a switched-on state, to enable the at least one secondary alternating current power supply unit to connect to the first alternating current bus and output an alternating current voltage to the first alternating current bus, where the first threshold is less than or equal to the second threshold.

Based on the technical solution, the plurality of alternating current power supply units in the power system are divided into the primary alternating current power supply unit that is first connected to the first alternating current bus and the secondary alternating current power supply unit that is subsequently connected to the first alternating current bus. Because the secondary alternating current power supply unit is connected to the first alternating current bus when the bus voltage value of the first alternating current bus is in the rise phase, the primary alternating current power supply unit may not need to independently run with load until the first alternating current bus reaches a rated voltage value. This reduces a hardware requirement for a single alternating current power supply unit, and can complete start of the power system without increasing hardware costs.

In addition, the secondary alternating current power supply unit outputs the alternating current voltage based on a bus voltage in the open-circuit state before the secondary alternating current power supply unit is connected to the first alternating current bus. To be specific, the alternating current voltage output by the secondary alternating current power supply unit can be dynamically consistent with the bus voltage on the first alternating current bus, and is in an accompanying state. Therefore, a platform period (period in which the voltage value of the alternating current bus remains unchanged) for connecting the secondary alternating current power supply unit may not need to be set for the power system, and the secondary alternating current power supply unit can be connected to the first alternating current bus in a process in which the bus voltage rises, to reduce time for completing start.

With reference to the first aspect, in some implementations of the first aspect, a value of the alternating current voltage output by the primary alternating current power supply unit to the first alternating current bus increases at a first rate, and a value of the alternating current voltage output by the secondary alternating current power supply unit in the open-circuit state increases at a second rate, where the first rate and the second rate are the same.

Based on the technical solution, the value of the alternating current voltage output by the secondary alternating current power supply unit in the open-circuit state increases at the second rate, so that the secondary alternating current power supply unit can be connected to the first alternating current bus in a process in which the bus voltage increases at the first rate, to improving stability of black start of the power system.

With reference to the first aspect, in some implementations of the first aspect, the second threshold is determined based on a device capacity of the secondary alternating current power supply unit and a load capacity of the first alternating current bus.

Based on the technical solution, the second threshold for switch-on canbe appropriately set for the power system based on the device capacity of the secondary alternating current power supply unit and the load capacity of the first alternating current bus, so that the secondary alternating current power supply unit can be connected to the first alternating current bus at an appropriate moment, to improve reliability of the start of the power system.

With reference to the first aspect, in some implementations of the first aspect, the at least one secondary alternating current power supply unit is divided into N secondary alternating current power supply unit groups, where N is a positive integer greater than 1, second thresholds corresponding to secondary alternating current power supply units included in each secondary alternating current power supply unit group are the same, and a second threshold $V_{mrg}^i$ corresponding to an $i^{th}$ secondary alternating current power supply unit group in the N secondary alternating current power supply unit groups meets the following conditions:

$$V_{mrg}^{i-1} \leq V_{mrg}^i, \ V_{mrg}^i \leq V_{max}^i, \ 2 \leq i \leq N,$$

where

$V_{mrg}^{i-1}$ indicates a second threshold corresponding to an $(i-1)^{th}$ secondary alternating current power supply unit group in the N secondary alternating current power supply unit groups, $V_{max}^i$ indicates a third threshold corresponding to the $i^{th}$ secondary alternating current power supply unit group, and $V_{max}^i$ meets:

$$S^i(V_{max}^i) = S(V_{max}^i),$$

where

$S^i(V_{max}^i)$ indicates a sum, corresponding to a case in which values of voltages output by secondary alternating current power supply units in the first i secondary alternating current power supply unit groups in the N secondary alternating current power supply unit groups each are $V_{max}^i$ and a value of a voltage output by the primary alternating current power supply unit is $V_{max}^i$, of capacities output by the secondary alternating current power supply units in the first i secondary alternating current power supply unit groups and a capacity output by the primary alternating current power supply unit, and $S(V_{max}^i)$ indicates a load capacity of the first alternating current bus corresponding to a case in which the bus voltage value is $V_{max}^i$.

Based on the technical solution, a maximum second threshold (namely, the third threshold) of each secondary alternating current power supply unit can be set for the power system, so that when the secondary alternating current power supply unit is connected to the first alternating current bus, the load capacity of the first alternating current bus is less than or equal to a total capacity of the alternating current power supply unit to be connected at this time and all alternating current power supply units that have been connected to the first alternating current bus. To be specific, the second threshold for switch-on designed in the technical solution can reduce the circumstance that a connected alternating current power supply unit cannot support the load capacity of the first alternating current bus because the secondary alternating current power supply unit is connected too late, to improve the reliability of the start of the power system.

With reference to the first aspect, in some implementations of the first aspect, a first alternating current power supply unit in the plurality of alternating current power supply units includes a second alternating current bus and at least one alternating current coupling sub-unit, and the at least one alternating current coupling sub-unit is configured to supply electric energy to the second alternating current bus. The power system further includes a transformer unit, where the transformer unit includes a transformer and a transformer switch, a first end of the transformer is connected to the first alternating current bus by using the transformer switch, a second end of the transformer is connected to the second alternating current bus by using a switch unit connected to the first alternating current power supply unit, and the transformer is configured to perform voltage transformation between the first alternating current bus and the corresponding second alternating current bus. The at least one controller is further configured to: before starting the primary alternating current power supply unit to output the alternating current voltage to the first alternating current bus, control the transformer switch to enter a switched-on state, to connect the transformer unit to the first alternating current bus.

Based on the technical solution, the power system may include alternating current buses of different voltage levels, and the alternating current buses of different voltage levels may be connected through a transformer unit. To be specific, the power system provided in embodiments of this application can be applied to a power system formed by splicing a plurality of energy storage units, energy storage arrays, micro grids, or the like, and is applicable to a plurality of scenarios. In addition, before the rated voltage of the first alternating current bus is established, the transformer may be electrically connected to the first alternating current bus, so that when the primary alternating current power supply unit subsequently drives the voltage on the first alternating current bus to rise, the voltage of the first alternating current bus gradually rises from zero to excite the transformer connected to the first alternating current bus. Therefore, compared with an implementation in which the transformer is connected at a full voltage (the transformer is connected to the first alternating current bus when the voltage on the first alternating current bus reaches the second threshold), this can reduce an excitation inrush current generated when the transformer is connected to the first alternating current bus, and improve safety of the power system.

With reference to the first aspect, in some implementations of the first aspect, the first rate is determined based on a rated voltage value of the first alternating current bus and a parameter of the transformer coupled to the first alternating current bus.

Based on the technical solution, the first rate may be set for the power system based on the parameter of the transformer, so that a large excitation inrush current of the transformer caused by an improper first rate can be avoided, to improve reliability of the power system.

With reference to the first aspect, in some implementations of the first aspect, the at least one controller includes a primary controller and a secondary controller. The primary controller is specifically configured to: generate first command values for a plurality of times at a first step, and control, based on the first command values generated for a plurality of times, the primary alternating current power supply unit to output the alternating current voltage to the first alternating current bus, where the first step is a difference between first command values generated in two adjacent times, and the first step is related to the first rate. The secondary controller is specifically configured to: generate second command values for a plurality of times at the first step, and control, based on the second command values generated for a plurality of times and a bus voltage, the alternating current voltage output by the at least one secondary alternating current power supply unit in the open-circuit state.

With reference to the first aspect, in some implementations of the first aspect, the primary controller is further configured to send a current first command value to the at least one secondary controller when the bus voltage value is greater than or equal to a fourth threshold, where the current first command value is a first command value corresponding to a case in which the bus voltage value is greater than or equal to the fourth threshold. The secondary controller is further configured to: determine a current second command value when the bus voltage value is greater than or equal to the fourth threshold, where the current second command value is a second command value corresponding to a case in which the bus voltage value is greater than or equal to the fourth threshold; and determine that a difference between the current first command value and the current second command value is an error command value, and a difference between a second command value generated one time after the error command value is determined and a second command value generated last time is a sum of the first step and the error command value.

Based on the technical solution, at least one fourth threshold used for command synchronization may be set for the power system. When the bus voltage value reaches the fourth threshold, the primary controller and the secondary controller record the first command value and the second command value at this time respectively, and the primary controller sends the current first command value to the secondary controller. Therefore, the secondary controller can implement command synchronization based on the difference between the current first command value and the current second command value. To be specific, when the secondary controller subsequently generates a slave unit voltage command value, the error command value may be superimposed on the first step. The voltage command value generated by the secondary controller and a voltage command value generated by the primary controller can be close to each other, so that alternating current power supply units can share black start load evenly, to improve the reliability of the start of the power system.

According to a second aspect, a method for starting a power system is provided. The power system includes a first alternating current bus, a plurality of alternating current power supply units, a plurality of switch units, and at least one controller. The plurality of alternating current power supply units are connected to the first alternating current bus by using the plurality of switch units respectively. The plurality of alternating current power supply units are configured to supply electric energy to the first alternating current bus. The plurality of alternating current power supply units include a primary alternating current power supply unit and at least one secondary alternating current power supply unit. The method includes: The at least one controller starts the primary alternating current power supply unit to output an alternating current voltage to the first alternating current bus when a switch unit connected to the primary alternating current power supply unit is in a switched-on state. The at least one controller starts the secondary alternating current power supply unit to output an alternating current voltage in an open-circuit state when a switch unit connected to the at least one secondary alternating current power supply unit is in a switched-off state, and a bus voltage value of the first alternating current bus is greater than or equal to a first threshold and is still in a rise phase. When the bus voltage value of the first alternating current bus is greater than or equal to a second threshold and is still in the rise phase, the at least one controller controls the switch unit connected to the at least one secondary alternating current power supply unit to enter a switched-on state, to enable the at least one secondary alternating current power supply unit to connect to the first alternating current bus and output an alternating current voltage to the first alternating current bus, where the first threshold is less than the second threshold.

For descriptions of technical effects of the second aspect and various implementations with reference to the second aspect, refer to the related descriptions of the first aspect. Details are not described again.

With reference to the second aspect, in some implementations of the second aspect, a value of the alternating current voltage output by the primary alternating current power supply unit to the first alternating current bus increases at a first rate, and a value of the alternating current voltage output by the secondary alternating current power supply unit in the open-circuit state increases at a second rate, where the first rate and the second rate are the same.

With reference to the second aspect, in some implementations of the second aspect, the second threshold is determined based on a device capacity of the at least one secondary alternating current power supply unit and a load capacity of the first alternating current bus.

With reference to the second aspect, in some implementations of the second aspect, there are a plurality of secondary alternating current power supply units. The plurality of secondary alternating current power supply unit are divided into N secondary alternating current power supply unit groups, where N is a positive integer greater than 1, second thresholds corresponding to secondary alternating current power supply units included in each secondary alternating current power supply unit group are the same, and a second threshold $V_{mrg}^{i}$ corresponding to an $i^{th}$ secondary alternating current power supply unit group in the N secondary alternating current power supply unit groups meets the following conditions:

$$V_{mrg}^{i-1} \leq V_{mrg}^{i}, V_{mrg}^{i} \leq V_{max}^{i}, 2 \leq i \leq N,$$

where
$V_{mrg}^{i-1}$ indicates a second threshold corresponding to an $(i-1)^{th}$ secondary alternating current power supply unit group in the N secondary alternating current power supply unit groups, $V_{max}^{i}$ indicates a third threshold corresponding to the $i^{th}$ secondary alternating current power supply unit group, and $V_{max}^{i}$ meets:

$$S^{i}(V_{max}^{i}) = S(V_{max}^{i}),$$

where
$S^{i}(V_{max}^{i})$ indicates a sum, corresponding to a case in which values of voltages output by secondary alternating current power supply units in the first i secondary alternating current power supply unit groups in the N secondary alternating current power supply unit groups each are $V_{max}^{i}$ and a value of a voltage output by the primary alternating current power supply unit is $V_{max}^{i}$, of capacities output by the secondary alternating current power supply units in the first i secondary alternating current power supply unit groups and a capacity output by the primary alternating current power supply unit, and $S(V_{max}^{i})$ indicates a load capacity of the first alternating current bus corresponding to a case in which the bus voltage value is $V_{max}^{i}$.

With reference to the second aspect, in some implementations of the second aspect, a first alternating current power supply unit in the plurality of alternating current power supply units includes a second alternating current bus and at least one alternating current coupling sub-unit, and the at least one alternating current coupling sub-unit is configured to supply electric energy to the second alternating current bus. The power system further includes a transformer unit, where the transformer unit includes a transformer and a transformer switch, a first end of the transformer is connected to the first alternating current bus by using the transformer switch, a second end of the transformer is connected to the second alternating current bus by using a switch unit connected to the first alternating current power supply unit, and the transformer is configured to perform voltage transformation between the first alternating current bus and the corresponding second alternating current bus. The method further includes: before starting the primary alternating current power supply unit to output the alternating current voltage to the first alternating current bus, the at least one controller controls the transformer switch to enter a switched-on state, to connect the transformer to the first alternating current bus.

With reference to the second aspect, in some implementations of the second aspect, the first rate is determined based on a rated voltage value of the first alternating current bus and a parameter of the transformer that is in the transformer unit and that is coupled to the first alternating current bus.

With reference to the second aspect, in some implementations of the second aspect, the at least one controller includes a primary controller and a secondary controller. The starting the primary alternating current power supply unit to output an alternating current voltage to the first alternating current bus includes: The primary controller generates first command values for a plurality of times at a first step, and controls, based on the first command values generated for a plurality of times, the primary alternating current power supply unit to output the alternating current voltage to the first alternating current bus, where the first step is a difference between first command values generated in two adjacent times, and the first step is related to the first rate. The starting the secondary alternating current power supply unit to output an alternating current voltage in an open-circuit state includes: The secondary controller generates second command values for a plurality of times at the first step, and controls, based on the second command values generated for a plurality of times and a bus voltage, the alternating current voltage output by the secondary alternating current power supply unit in the open-circuit state.

With reference to the second aspect, in some implementations of the second aspect, the method further includes: The primary controller sends a current first command value to the secondary controller when the bus voltage value is greater than or equal to a fourth threshold, where the current first command value is a first command value corresponding to a case in which the bus voltage value is greater than or equal to the fourth threshold. The secondary controller determines a current second command value when the bus voltage value is greater than or equal to the fourth threshold, where the current second command value is a second command value corresponding to a case in which the bus voltage value is greater than or equal to the fourth threshold. The secondary controller determines that a difference between the current first command value and the current second command value is an error command value, and a difference between a second command value generated one time after the error command value is determined and a second command value generated last time is a sum of the first step and the error command value.

According to a third aspect, a controller is provided. The controller is configured to perform the method according to the second aspect or any one of the implementations with reference to the second aspect.

For example, the controller includes one or more processing circuits. The one or more processing circuits are configured to perform the method according to the second aspect or any one of the implementations with reference to the second aspect.

## BRIEF DESCRIPTION OF DRAWINGS

FIG. 1 is a schematic diagram of a structure of a power system according to an embodiment of this application;
FIG. 2 is a schematic diagram of a structure of a possible alternating current coupling unit according to an embodiment of this application;
FIG. 3 is a schematic diagram of a structure of a power system including alternating current buses of three rated voltage levels according to an embodiment of this application;
FIG. 4 is a schematic flowchart of a method for starting a power system according to an embodiment of this application;
FIG. 5 is a schematic flowchart of a black start beginning phase according to an embodiment of this application;
FIG. 6 is a schematic flowchart of a black start preparation phase according to an embodiment of this application;
FIG. 7 is a schematic diagram of a relationship between a device capacity, a load capacity, and a voltage;
FIG. 8 is a schematic flowchart of a black start boost phase according to an embodiment of this application;
FIG. 9 is a schematic description diagram in which a primary alternating current power supply unit generates a master unit voltage command value and a secondary alternating current power supply unit generates a slave unit voltage command value;
FIG. 10 is a schematic flowchart of a command synchronization method according to an embodiment of this application;
FIG. 11 is a schematic diagram for describing a command synchronization method according to an embodiment of this application;
FIG. 12A and FIG. 12B are a schematic flowchart of an example in which microgrids SS-1, SS-2, and SS-3 perform black start according to an embodiment of this application; and

FIG. 13 is a schematic diagram for describing technical effects according to an embodiment of this application.

## DESCRIPTION OF EMBODIMENTS

The following describes technical solutions of this application with reference to accompanying drawings.

The technical solutions in embodiments of this application may be applied to various power systems such as a microgrid, a renewable energy power plant, a power distribution grid, and a battery energy storage power plant. The power system supports a plurality of power generation manners, for example, conventional power generation modes manners such as hydraulic power generation, thermal power generation, or nuclear power generation, or new energy power generation manners such as wind power generation, photovoltaic power generation, and biomass power generation. This is not limited in this application.

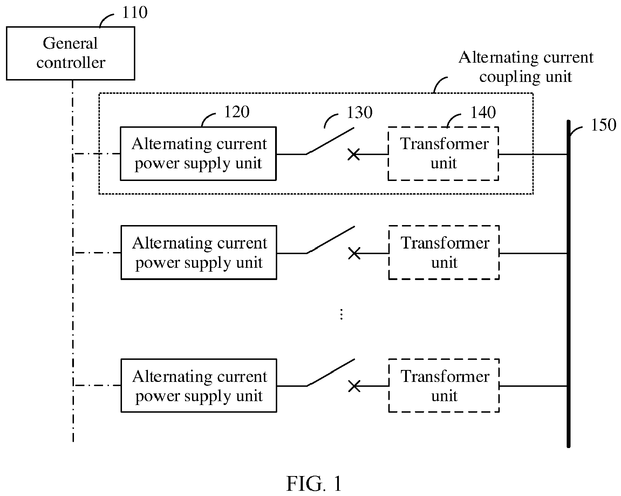

FIG. 1 is a schematic diagram of a structure of a power system according to an embodiment of this application. The power system includes a general controller 110, a plurality of alternating current power supply units 120, a plurality of switch units 130, and an alternating current bus 150. The plurality of alternating current power supply units 120 are connected to the alternating current bus 150 by using the plurality of switch units 130 respectively. The plurality of alternating current power supply units 120 may be configured to supply electric energy to the alternating current bus 150. The plurality of switch units 130 may implement electrical connection and electrical disconnection between the alternating current power supply unit 120 and the alternating current bus 150.

If an output voltage level of an alternating current power supply unit 120 is different from a voltage level of an alternating current bus, the power system further includes at least one transformer unit 140. For ease of distinguishing, an alternating current power supply unit 120 including an alternating current bus of another voltage level is referred to as a first alternating current power supply unit, and another alternating current power supply unit 120 is referred to as a second alternating current power supply unit. An output end of the first alternating current power supply unit is connected to the alternating current bus 150 by using the switch unit 130 and the transformer unit 140. An output end of the second alternating current power supply unit is connected to the alternating current bus 150 by using the switch unit 130. The transformer unit 140 may transform an alternating current voltage of the output end of the first alternating current power supply unit to an alternating current voltage on the alternating current bus 150.

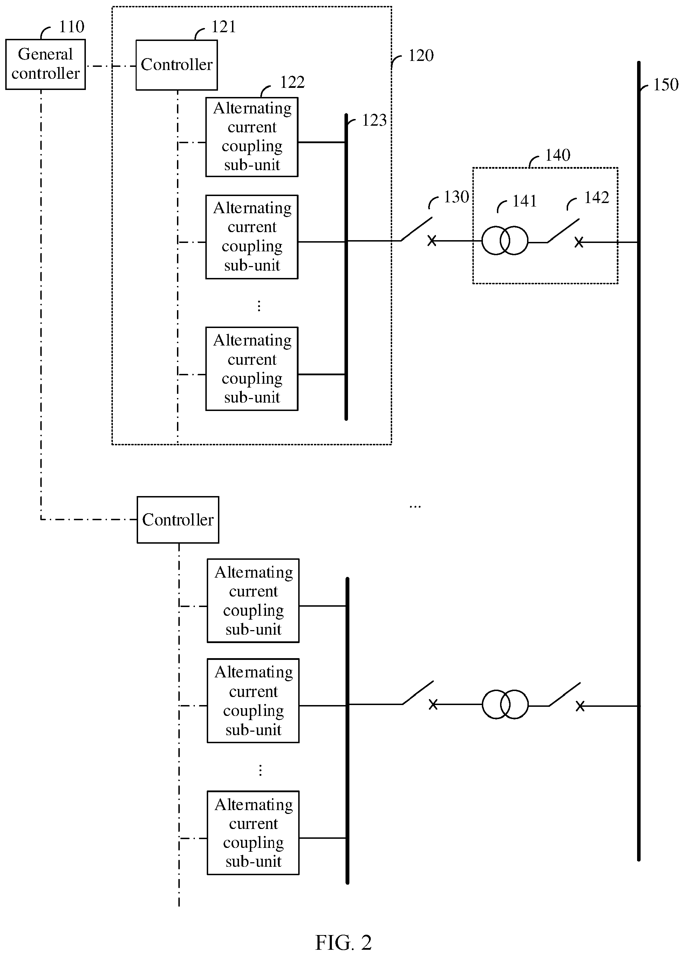

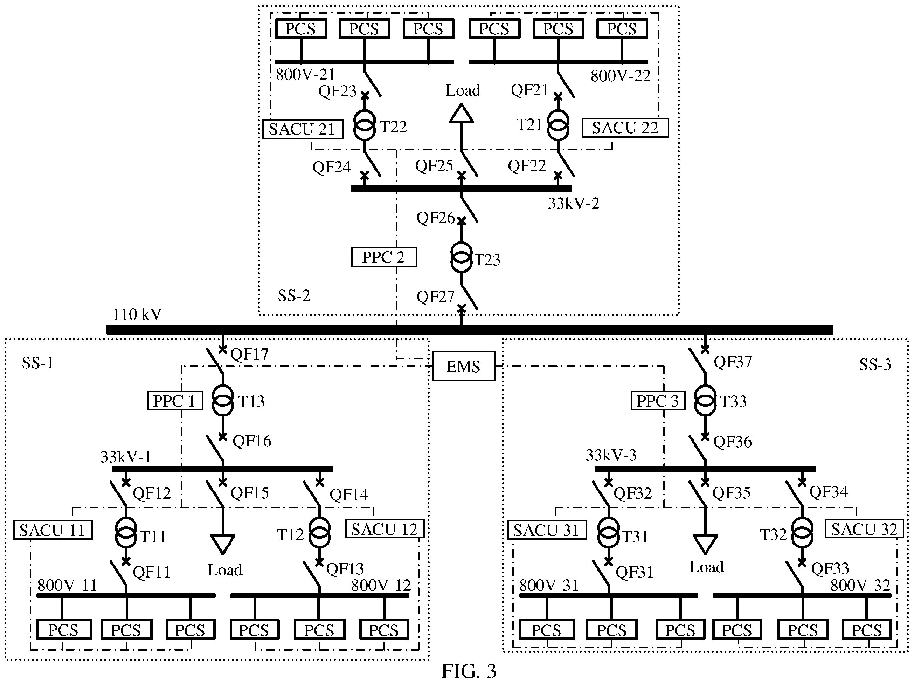

For ease of description, in the following description, a branch coupled to the alternating current bus 150 and a unit included in the branch may be referred to as an alternating current coupling unit. For example, the alternating current power supply unit 120, the switch unit 130, and the transformer unit 140 may be referred to as an alternating current coupling unit. For example, one alternating current coupling unit includes one or more power apparatuses that can output an alternating current voltage, such as power conversion systems (power conversion systems, PCSs) or photovoltaic inverters. Alternatively, one alternating current coupling unit may be an energy storage array or a microgrid that includes a plurality of PCSs or photovoltaic inverters, an alternating current bus of another level, and a transformer unit. This is not specifically limited in this application. For more detailed description of a possible structure of an alternating current coupling unit, refer to descriptions of FIG. 2 and FIG. 3 below. Details are not described herein.

The general controller 110 in this embodiment of this application may communicate with a plurality of alternating current coupling units through communication lines (drawn in dot-dash lines). For example, the general controller 110 may directly or indirectly control switching on and switching off of the switch unit 130. Similarly, the general controller 110 may also directly or indirectly control the transformer unit 140. The general controller 110 in this embodiment of this application may include a device having a control capability, for example, a smart array control unit (smart array control unit, SACU), a power plant controller (power plant controller, PPC), and a microgrid central controller (micro-grid central controller, MGCC), or an energy management system (energy management system, EMS).

The alternating current power supply unit 120 in this embodiment of this application may be represented as a voltage source, and is configured to output an alternating current voltage. The voltage source refers to a device whose voltage at an output end is represented by a specified voltage amplitude, frequency, and phase. The voltage at the output end of the device is determined based on a characteristic of the device, a current at the output end is determined based on a load, and the output end is represented by a low impedance feature.

The switch unit 130 in this embodiment of this application may include any one or more of a circuit breaker, a contactor, a power relay, a transistor, or the like.

It should be noted that, when one alternating current coupling unit includes one or more PCSs or photovoltaic inverters, the switch unit 130 in this embodiment of this application may be a contact switch of an output end of the PCS or the photovoltaic inverter.

In this embodiment of this application, a quantity of transformer units 140 may be less than or equal to a quantity of alternating current power supply units 120. To be specific, in the power system, some alternating current power supply units 120 may be connected to the alternating current bus 150 by using the switch units 130, and some alternating current power supply units 120 may be connected to the alternating current bus 150 by using the switch units 130 and the transformer units 140. When the alternating current power supply unit 120 is connected to the alternating current bus 150 by using the switch unit 130 and the transformer unit 140, the alternating current power supply unit 120 may include at least one alternating current sub-bus. For example, the alternating current power supply unit 120 includes an alternating current bus with a rated voltage of 33 kilo voltage (kilo voltage, kV), the 33 kV alternating current bus is connected to the alternating current bus 150 with a rated voltage of 110 kV by using the switch unit 130 and the transformer unit 140, and the transformer unit 140 can implement voltage transformation between an alternating current voltage of 33 kV and an alternating current voltage of 110 kV

The alternating current bus 150 in this embodiment of this application is configured to aggregate alternating current voltages output by the plurality of alternating current power supply units 120, and a load connected to the alternating current bus 150 may obtain electric energy from the alternating current bus 150 to operate. In order for the load to operate normally, it is generally required that the voltage on the alternating current bus 150 is maintained at a rated frequency and a rated voltage. For example, a 110 kilo voltage (kilo voltage, kV) utility frequency alternating current bus indicates that a rated voltage of the alternating current bus is 110 kV and a frequency is utility frequency 50 hertz (Hertz, Hz).

The alternating current coupling unit may have a plurality of structures. For example, one alternating current coupling unit may be equivalent to one PCS. In this case, no transformer unit 140 may be designed for the alternating current coupling unit, and the PCS may be directly coupled to the alternating current bus 150. For another example, one alternating current coupling unit may include a plurality of alternating current coupling sub-units and an alternating current bus of another voltage level. For ease of understanding of this embodiment of this application, the following describes a structure of the alternating current coupling unit in this implementation with reference to FIG. 2.

FIG. 2 is a schematic diagram of a structure of a possible alternating current coupling unit according to an embodiment of this application. The alternating current coupling unit includes an alternating current power supply unit 120, a switch unit 130, and a transformer unit 140 that are connected in series. The alternating current power supply unit 120 includes a controller 121, a plurality of alternating current coupling sub-units 122, and an alternating current bus 123. The plurality of alternating current coupling sub-units 122 are coupled to the alternating current bus 123, and the controller 121 may be configured to control alternating current voltages output by the plurality of alternating current coupling sub-units 122. In this case, an alternating current voltage output by the alternating current power supply unit 120 may be equivalent to an alternating current voltage on the alternating current bus 123. The transformer unit 140 may include a transformer 141. Optionally, the transformer unit 140 may further include a transformer switch 142. A first side of the transformer 141 is connected to the alternating current bus 123 by using the switch unit 130, and a second side of the transformer 141 may be connected to the alternating current bus 150 by using the transformer switch 142.

It should be noted that one alternating current coupling sub-unit 122 in this embodiment of this application may alternatively be a structure that includes an alternating current power supply, a switch, an alternating current bus, and a transformer. In other words, the power system in embodiments of this application may include alternating current buses of a plurality of rated voltage levels, and each alternating current bus of a high rated voltage level may be coupled to a plurality of alternating current buses of a low rated voltage level in parallel. For ease of understanding this embodiment of this application, the following describes, with reference to FIG. 3, a power system including alternating current buses of a plurality of rated voltage levels.

It should be further noted that, to simplify description, in the following description, "the controller in the alternating current coupling unit controls corresponding" may be simplified as "the alternating current coupling unit controls corresponding".

FIG. 3 is a schematic diagram of a structure of a power system including alternating current buses of three rated voltage levels according to an embodiment of this application. Refer to FIG. 3. The power system includes an alternating current bus with a rated voltage of 110 kV, three alternating current coupling units including 33 kV alternating current buses are coupled to the 110 kV alternating current bus, two alternating current coupling sub-units including 800 V alternating current buses are coupled to each 33 kV alternating current bus, and a plurality of inverter units are coupled to each 800 V alternating current bus. The inverter unit may include a power apparatus that can output an alternating current voltage, such as a power conversion system (power conversion system, PCS) or a photovoltaic inverter. FIG. 3 describes an example in which three PCSs are coupled to an 800 V alternating current bus.

For ease of description, the three alternating current coupling units including the 33 kV alternating current buses are respectively indicated by micro grids 1 to 3 (SS-1, SS-2, and SS-3). A controller controlling the microgrids SS-1, SS-2, and SS-3 are indicated by anEMS. Sub-controllers in the microgrids SS-1, SS-2, and SS-3 are respectively indicated by a PPC 1, a PPC 2, and a PPC 3. The 33 kV alternating current buses in the microgrids SS-1, SS-2, and SS-3 are respectively indicated by an alternating current bus 33kV-1, an alternating current bus 33kV-2, and an alternating current bus 33kV-3. Transformers between the alternating current bus 33kV-1, the alternating current bus 33kV-2, and the alternating current bus 33kV-3 and the 110 kV alternating current bus are respectively indicated by T13, T23, and T33. Switches between the alternating current bus 33kV-1, the alternating current bus 33kV-2, and the alternating current bus 33kV-3 and T13, T23 and T33 are respectively indicated by QF16, QF26, and QF36. Switches between T13, T23, and T33 and the 110 kV alternating current bus are respectively indicated by QF17, QF27, and QF37. Each micro grid includes two 800 V alternating current buses. The microgrid SS-1 is used as an example for description. The 800 V alternating current buses in the microgrid SS-1 are respectively indicated by an alternating current bus 800V-11 and an alternating current bus 800V-12. Three PCSs are coupled to each 800 V alternating current bus. An SACU 11 is used to control the PCSs on the alternating current bus 800V-11, and an SACU 12 is used to control the PCSs on the alternating current bus 800V-12. Transformers between the alternating current bus 800V-11 and the alternating current bus 800V-12 and the alternating current bus 33kV-1 are respectively indicated by T11 and T12. Switches between the alternating current bus 800V-11 and the alternating current bus 800V-12 and T11 and T12 are respectively indicated by QF11 and QF13. Switches between T11 and T12 and the alternating current bus 33kV-1 are respectively indicated by QF12 and QF14. In addition, other components such as a power supply and a load in the microgrid SS-1 may be indicated by load together, and are connected to the alternating current bus 33kV-1 by using a switch QF15. Structures of the microgrid SS-2 and the microgrid SS-3 are similar to the structure of the microgrid SS-1. Details are not described herein again.

It should be noted that FIG. 3 describes merely a possible power system. The power system in embodiments of this application may include only an alternating current bus of one voltage level. For example, the power system in embodiments of this application may be an energy storage array including one 800 V alternating current bus, three PCSs, and one SACU in FIG. 3. In this case, the power system may not include a transformer unit, and each PCS may be equivalent to an alternating current coupling unit that includes an alternating current voltage unit and a switch unit. The power system in embodiments of this application may alternatively include alternating current buses of a plurality of voltage levels. For example, the power system in embodiments of this application may be a microgrid in FIG. 3, the entire power system shown in FIG. 3, or a power system that may include more microgrids or alternating current buses of more voltage levels. Structures of a plurality of alternating current coupling units on one alternating current bus may be the same, and the alternating current coupling units include alternating current buses of a same voltage level. Alternatively, structures of a plurality of alternating current coupling units on one alternating current bus may be different. For example, two alternating current coupling units may include alternating current buses of different voltage levels. This is not specifically limited in this application.

The foregoing describes the possible power system in embodiments of this application. For clarity, the following explains some terms in embodiments of this application.

1. Black start and black-start power supply

The black start refers to a process: When a power failure occurs within ranges of power systems such as a microgrid, an energy storage array, a multi-cluster microgrid, a renewable energy power plant, and a power distribution grid due to maintenance, serious faults, or other reasons, internal power supplying of the system is gradually recovered by using a synchronous generator set inside the system or another power supply with a self-starting capability without relying on an external power supply to implement stable operation of the system again.

The black-start power supply refers to a device that operates as a voltage source or a current source during black start of the power system to support the power system to gradually establish a rated voltage from full blackout.

For example, if the power system shown in FIG. 3 is completely out of power, the power system is in a full blackout state, and the voltage on each alternating current bus is gradually recovered to a rated voltage by the power system by relying on the PCS inside the system. This recovery process may be referred to as a black start process of the power system. The power supply PCS used for black start may be referred to as the black-start power supply.

2. Black start load

The black start load may also be referred to as start load. The black start load is load that a black-start power supply needs to bear during black start of a power system. Because a user load of the power system is usually disconnected during the black start, the black start load mainly includes various electronic devices such as transformers and transmission lines in the power system.

3. Circulating current

When a plurality of power supply devices are in parallel running, currents output by the power supply devices are inconsistent. Therefore, a part of the current flows from one power supply to another power supply instead of to a load. This part of the current is referred to as the circulating current.

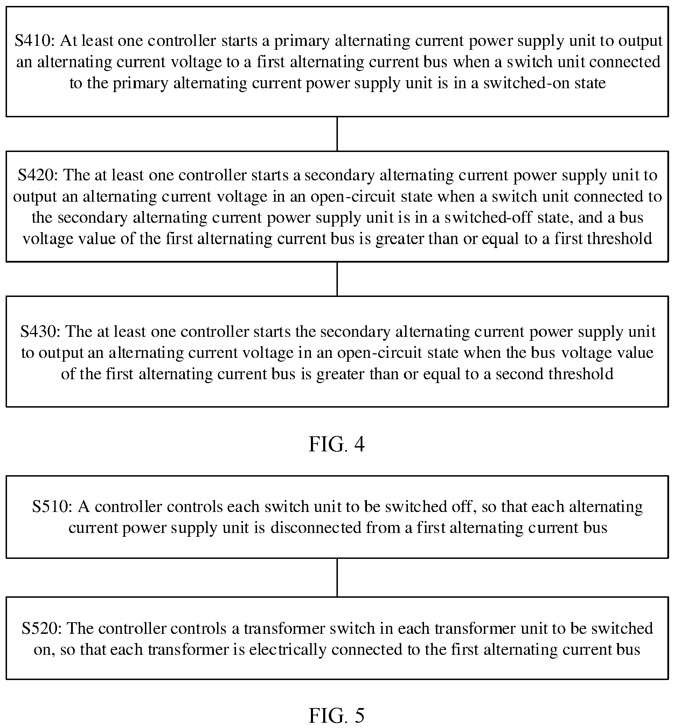

For example, all the three microgrids in FIG. 4 are connected to the alternating current bus of 110 kV If voltage amplitudes, frequencies, or phases of alternating current outputs by the three microgrids are different, currents output by the three microgrids are different, and a current of a high potential flows to a current of a low potential. In other words, a part of the current flows from one microgrid to another microgrid, to form a circulating current.

4. Device capacity

The device capacity refers to a maximum voltage that an end of a power supply device can bear and a maximum current that the end of the power supply device can output or absorb due to the limitation of a hardware capability of the power supply device. Therefore, a maximum power that can be output or absorbed by the power supply device is limited, and the maximum power may be referred to as a capacity of the power supply device.

5. Synchronization control

The synchronization control may also be referred to as pre-synchronization control. The synchronization control refers to a process in which, before a plurality of independent power systems (such as the three micro grids in FIG. 3) are connected in parallel, voltage amplitudes, frequencies, and phases of the systems at connection points are adjusted, so that the voltage amplitudes, frequencies, and phases of the systems at the connection points remain the same. This can reduce a circulating current generated during switched-on parallel connection.

In a black start process in which a plurality of black-start power supplies participates, black start may be usually performed in two manners: synchronous black start and asynchronous black start.

If the synchronous black start manner is used, output ends of a plurality of black-start power supplies are connected in parallel before startup, a controller may send a black start command through broadcasting, and the plurality of black-start power supplies receive the black start command and begin to start, and synchronously output voltages. For example, if the power system shown in FIG. 3 uses a synchronous black start manner, before startup, the switches QF17, QF27, and QF37 corresponding to the three microgrids are switched on, and output ends of the three microgrids are connected in parallel to the alternating current bus of 110 kV The EMS broadcasts a black start command to the three PPCs. After receiving the black start command, the three PPCs control the microgrids to start and gradually establish voltages at 110 kV high voltage sides of the transformers T13, T23 and T33.

However, this black start manner relies heavily on reliability of high-speed communication lines. If a communication delay exists when the black-start power supply receives the black start command, different black-start power supplies may receive the black start command at different moments. As a result, phases of voltages output by the different black-start power supplies are different, and a circulating current is generated between the plurality of black-start power supplies. For example, if a difference between moments at which two black-start power supplies receive the black start command reaches 5 ms, for a power system with a utility frequency of 50 Hz, a phase difference between voltages output by the two black-start power supplies is about 90 degrees, and a high circulating current is formed.

If the asynchronous black start manner is used, at present, one manner is as follows: One black-start power supply establishes a voltage of a system, and another black-start power supply is connected to the system through synchronization control after the system reaches a rated voltage. This manner can reduce a circulating current between a plurality of power systems. However, this manner requires that the black-start power supply that is first connected has a large device capacity and can independently bear black start load. For a power system with a high system voltage, costs of black start of the system are increased.

At present, another asynchronous black start manner can lower a requirement for the black-start power supply. First, a black-start power supply is connected to a system, to gradually establish a voltage. When the voltage of the system reaches a predetermined voltage less than a rated voltage, the voltage of the system is maintained at the predetermined voltage and is unchanged. Then, some of black-start power supplies are connected to the system in a synchronization control mode, to continuously establish the voltage until the system reaches the rated voltage, and the remaining other black-start power supplies are connected. A process in which the system is maintained at the predetermined voltage and is unchanged may be referred to as a voltage platform period. One or more voltage platform periods may be set in a process in which the black start is performed in this manner, and the one or more voltage platform periods significantly increase time required for completing the black start.

This application provides a power system and a method for starting a power system, to complete start of the power system without increasing hardware costs. The following describes the method for starting a power system with reference to FIG. 4.

FIG. 4 is a schematic flowchart of a method for starting a power system according to an embodiment of this application. The method may be applied to any power system including a plurality of alternating current coupling units. For example, the rated voltage of 110 kV may be established for the three microgrids in FIG. 3 by the method provided in this application. Alternatively, the rated voltage of 33 kV may be established for the two energy storage arrays in FIG. 3 by the method provided in this application. Alternatively, the rated voltage of 800 V may be established for the three PCSs in FIG. 3 by the method provided in this application. Alternatively, a rated voltage corresponding to the alternating current buses may be established for the plurality of alternating current power supply units coupled to each alternating current bus in FIG. 3 by the method provided in this application. This is not specifically limited in this application.

The following describes the method with reference to the power system shown in FIG. 1. It should be noted that, for ease of distinguishing alternating current buses of different voltage levels, the alternating current bus 150 is referred to as a first alternating current bus below.

It should be further noted that, for ease of description, in this application, an alternating current power supply unit in a primary alternating current coupling unit may be referred to as a primary alternating current power supply unit, and an alternating current power supply unit in a secondary alternating current coupling unit may be referred to as a secondary alternating current power supply unit. It may be understood that, in this application, a term "a switch unit corresponding to an alternating current power supply unit" refers to an alternating current power supply unit and a switch unit that are located in a same alternating current coupling unit. A term "a threshold corresponding to a secondary alternating current coupling unit" and "a threshold corresponding to a secondary alternating current power supply unit" may express a same meaning. A term "an alternating current coupling unit controls a corresponding unit" may mean that the alternating current coupling unit controls a unit in the alternating current coupling unit. Details are not described below.

It should be further noted that "linear rise" in this embodiment of this application may mean approximately linear rise, and may include linear rise with disturbance. The disturbance may be caused by factors such as an environment or control precision.

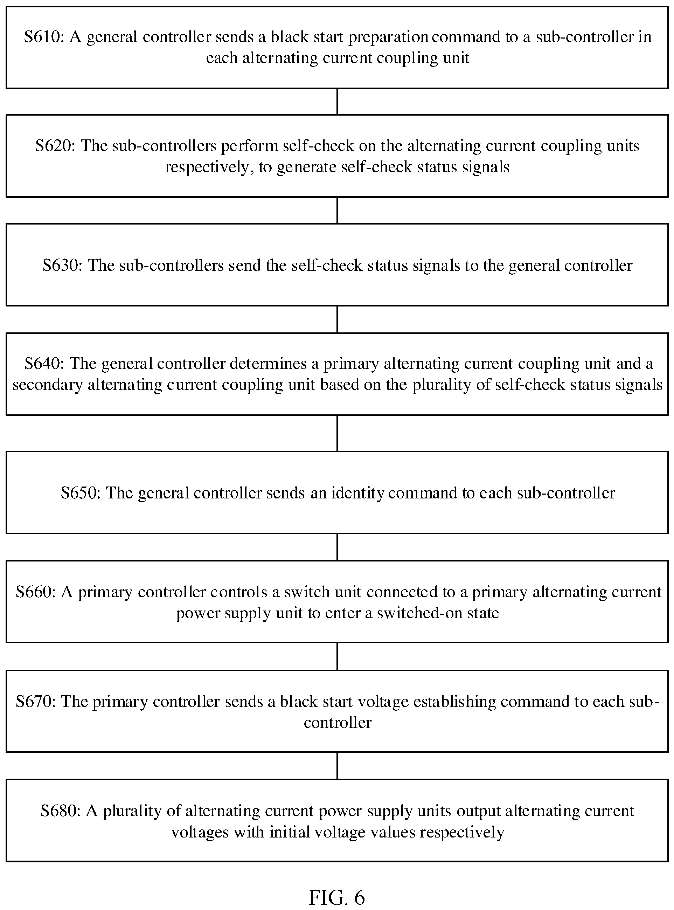

A manner of determining the primary alternating current coupling unit and the secondary alternating current coupling unit, a manner of grouping secondary alternating current coupling units, and setting of a switch-on voltage value may be preconfigured by the power system, or may be configured by a general controller in the power system. For more detailed description, refer to description in FIG. 6 below. Details are not described herein. The method may include steps S410 to S440. The steps S410 to S440 may be performed based on control of at least one controller in the power system, for example, may be performed by the general controller and a sub-controller in each alternating current coupling unit. For ease of differentiation, a sub-controller in the primary alternating current coupling unit is sometimes referred to as a primary controller, and a sub-controller in the secondary alternating current coupling unit is referred to as a secondary controller.

S410: The at least one controller starts the primary alternating current power supply unit to output an alternating current voltage to the first alternating current bus when a switch unit connected to the primary alternating current power supply unit is in a switched-on state.

For example, all switch units in the power system may be in a switched-off state before startup. After the general controller of the power system determines to begin the black start, the primary controller in the primary alternating current coupling unit may control the switch unit connected to the primary alternating current coupling unit to be switched on, so that the primary alternating current power supply unit is electrically connected with the first alternating current bus.

A value of the alternating current voltage output by the primary alternating current power supply unit to the first alternating current bus may rise at a first rate. It may be understood that the primary alternating current power supply unit is electrically connected to the first alternating current bus, and the primary alternating current power supply unit is in a loaded running state. The value of the alternating current voltage output by the primary alternating current power supply unit linearly rises at the first rate, and a bus voltage value on the first alternating current bus also linearly rises at the first rate.

S420: The at least one controller starts at least one secondary alternating current power supply unit to output an alternating current voltage in an open-circuit state when a switch unit connected to the secondary alternating current power supply unit is in a switched-off state, and the bus voltage value of the first alternating current bus is greater than or equal to a first threshold.

For example, before the bus voltage value reaches a second threshold, a switch unit in the secondary alternating current coupling unit may remain in a switched-off state. In other words, the secondary alternating current power supply unit is electrically disconnected from the first alternating current bus, and the secondary alternating current power supply unit outputs the alternating current voltage in the open-circuit state. The secondary controller in the secondary alternating current coupling unit may control, based on a bus voltage on the first alternating current bus, the alternating current voltage output by the secondary alternating current power supply unit in the open-circuit state. For example, the secondary alternating current coupling unit may collect a bus voltage value, a phase, and a frequency on the first alternating current bus for a plurality of times, and control the alternating current voltage output by the secondary alternating current power supply unit based on the collected bus voltage value, phase and frequency.

A value of the alternating current voltage output by each secondary alternating current power supply unit in the open-circuit state may rise at a second rate, where the first rate and the second rate are the same. In other words, the voltage values of the secondary alternating current power supply unit, the primary alternating current power supply unit, and the first alternating current bus may synchronously rise at the same rate, and the alternating current voltage output by the secondary alternating current power supply unit in the open-circuit state is dynamically consistent with the bus voltage on the first alternating current bus, and is in an accompanying state.

It should be noted that the secondary controller may control, in a plurality of manners, the alternating current voltage output by the secondary alternating current power supply unit in the open-circuit state, so that an amplitude, a frequency, and a phase of the output alternating current voltage can be synchronized with the bus voltage value, the bus voltage frequency, and the bus voltage phase on the first alternating current bus. A specific control method, for example, a virtual synchronous generator (virtual synchronous generator, VSG) control method, a droop control method, or a synchronization control method is not specifically limited in this application.

S430: When the bus voltage value of the first alternating current bus is greater than or equal to the second threshold, control the switch unit connected to the secondary alternating current power supply unit to enter a switched-on state, and control the secondary alternating current power supply unit to output an alternating current voltage to the first alternating current bus, where the second threshold is less than or equal to a rated voltage value, and the alternating current voltage output in the open-circuit state is determined based on the bus voltage on the first alternating current bus.

The secondary controller in the secondary alternating current coupling unit may detect the bus voltage value on the first alternating current bus, and control the switch unit connected to the secondary alternating current power supply unit to enter the switched-on state when the bus voltage value is greater than or equal to the corresponding second threshold. Therefore, the secondary alternating current power supply unit is electrically connected to the first alternating current bus, so that the secondary alternating current power supply unit is connected to the first alternating current bus, and begins to run with load.

It should be noted that the plurality of alternating current coupling units in the power system may include the primary alternating current coupling unit and at least one secondary alternating current coupling unit, and each of the at least one secondary alternating current coupling unit corresponds to one first threshold and one second threshold. The first threshold may be used to determine start time of the secondary alternating current coupling unit (for ease of reading, the first threshold is sometimes referred to as a threshold voltage value below). The second threshold may be used to determine time to switch on a switch unit connected to the secondary alternating current coupling unit (for ease of reading, the second threshold is sometimes referred to as a switch-on voltage value below). The secondary alternating current power supply unit may already output the alternating current voltage before being connected to the first alternating current bus. The second threshold is less than a rated voltage value of the first alternating current bus, that is, the secondary alternating current power supply unit may be connected to the first alternating current bus in a process of gradually establishing a rated voltage of the first alternating current bus.

It should be noted that there may be a plurality of secondary alternating current power supply units, each secondary alternating current power supply unit may correspond to a switch-on voltage value, and the plurality of secondary alternating current power supply units may be connected to the first alternating current bus in batches. For example, the plurality of secondary alternating current coupling units may be divided into a plurality of secondary alternating current coupling unit groups, the plurality of alternating current coupling unit groups correspond to a plurality of switch-on voltage values respectively, and at least one of the plurality of switch-on voltage values is less than or equal to the rated voltage of the first alternating current bus. For example, the power system includes 10 alternating current coupling units: alternating current coupling units #1 to #10, and the alternating current coupling unit #1 is set as the primary alternating current coupling unit. The alternating current coupling units #2 to #10 are set as the secondary alternating current coupling units, and are divided into three secondary alternating current coupling unit groups: secondary alternating current coupling unit groups #1 to #3. The secondary alternating current coupling unit group #1 includes secondary alternating current coupling units #2 to #4. The secondary alternating current coupling unit group #2 includes secondary alternating current coupling units #5 to #7. The alternating current coupling unit group #3 includes secondary alternating current coupling units #8 to #10. The alternating current coupling unit groups #1 to #3 correspond to switch-on voltage values #1 to #3. In other words, switch-on voltage values of the secondary alternating current coupling units #2 to #4 are the switch-on voltage value #1, switch-on voltage values of the secondary alternating current coupling units #5 to #7 are the switch-on voltage value #2, and switch-on voltage values of the secondary alternating current coupling units #8 to # 10 are the switch-on voltage value #3. The secondary alternating current coupling units #2 to #4 are connected to the first alternating current bus when the voltage value of the first alternating current bus is greater than or equal to the switch-on voltage value #1. The secondary alternating current coupling units #5 to #7 are connected to the first alternating current bus when the voltage value of the first alternating current bus is greater than or equal to the switch-on voltage value #2. The secondary alternating current coupling units #8 to # 10 are connected to the first alternating current bus when the voltage value of the first alternating current bus is greater than or equal to the switch-on voltage value #3.

Based on the foregoing technical solution, the plurality of alternating current coupling units in the power system are divided into the primary alternating current coupling unit that is first connected to the first alternating current bus and the at least one secondary alternating current coupling unit. Because the at least one secondary alternating current coupling unit is connected to the first alternating current bus before the first alternating current bus reaches the rated voltage value, the primary alternating current coupling unit may not need to independently run with load until the first alternating current bus reaches the rated voltage value, thereby reducing a hardware requirement for a single alternating current power supply unit. In addition, before the secondary alternating current power supply unit is connected to the first alternating current bus, the alternating current voltage output by the secondary alternating current power supply unit can be dynamically consistent with the alternating current voltage on the first alternating current bus, and is in an accompanying state. Therefore, a platform period (period in which the voltage value of the alternating current bus remains unchanged) for connecting the secondary alternating current coupling unit may not need to be set for the power system, and the secondary alternating current coupling unit may be connected to the first alternating current bus when the voltage value of the first alternating current bus linearly rises, to reduce time for completing start.

The foregoing describes the method in which the plurality of alternating current power supply units in the power system are connected to the first alternating current bus in batches to implement the black start. It may be understood that the steps S410 to 5430 may occur in different phases of the black start of the power system. For example, the black start of the power system may include the following three phases: a black start beginning phase, a black start preparation phase, and a black start boost phase. For ease of understanding of embodiments of this application, the following separately describes the foregoing three phases in more detail.

FIG. 5 is a schematic flowchart of a black start beginning phase according to an embodiment of this application.

S510: A controller controls each switch unit to be switched off, so that each alternating current power supply unit is disconnected from a first alternating current bus.

For example, a general controller determines to begin black start, and controls each alternating current power supply unit to be disconnected from the first alternating current bus. For example, the general controller may send a control signal to a sub-controller (including a primary controller and a secondary controller) in each alternating current coupling unit, and the control signal may be used to enable a switch in each switch unit to enter a switched-off state. If the power system further includes a voltage-sensitive load, the general controller may also control the load to disconnect from the first alternating current bus.

S520: The controller controls a transformer switch in each transformer unit to be switched on, so that each transformer is electrically connected to the first alternating current bus.

For example, before the black start preparation phase, the general controller may control the transformer switch in each transformer unit to be switched on, and connect each transformer to the first alternating current bus. To be specific, before a rated voltage of the first alternating current bus is established, a high-order side of the transformer may be connected to the first alternating current bus, so that when a primary alternating current power supply unit subsequently drives a voltage on the first alternating current bus to rise, the voltage of the first alternating current bus gradually rises from zero to excite the transformer connected to the first alternating current bus. Based on this implementation, compared with an implementation in which the transformer is connected at a full voltage (the transformer is connected to the first alternating current bus when the voltage on the first alternating current bus reaches a switch-on voltage value), this can reduce an excitation inrush current generated when the transformer is connected to the first alternating current bus, and improve safety of the power system.

The black start beginning phase of the power system is described above. After the black start beginning phase of the power system, each alternating current power supply unit in the power system is disconnected from the first alternating current bus, each transformer unit is connected to the first alternating current bus, and the power system may enter the black start preparation phase. The following describes the black start preparation phase with reference to FIG. 6.

FIG. 6 is a schematic flowchart of a black start preparation phase according to an embodiment of this application.

S610: A general controller sends a black start preparation command to a sub-controller in each alternating current coupling unit. Correspondingly, each sub-controller receives the black start preparation command from the general controller.

The black start preparation command may indicate sub-controllers to perform self-check on alternating current coupling units respectively.

S620: The sub-controllers perform self-check on alternating current coupling units respectively, to generate self-check status signals.

The self-check status signal may include status information such as information indicating a device capacity of an alternating current power supply unit or information indicating whether an alternating current power supply unit can operate normally.

S630: The sub-controllers send the self-check status signals to the general controller.

Correspondingly, the general controller receives the plurality of self-check status signals from the sub-controllers.

S640: The general controller determines a primary alternating current coupling unit and a secondary alternating current coupling unit based on the plurality of self-check status signals.

The general controller may determine a primary alternating current coupling unit and a secondary alternating current coupling unit in a plurality of manners, that is, may determine a primary alternating current power supply unit and a secondary alternating current power supply unit in a plurality of manners. For example, the general controller may set an alternating current power supply unit with a largest device capacity in a plurality of alternating current power supply units as the primary alternating current power supply unit, and set another alternating current power supply unit as the secondary alternating current power supply unit. This is not specifically limited in this application.

The general controller may further determine at least one switch-on voltage value corresponding to at least one secondary alternating current power supply unit. For example, the at least one switch-on voltage value is determined based on a device capacity of the at least one secondary alternating current power supply unit and a load capacity of a first alternating current bus, so that when the secondary alternating current power supply unit is connected to the first alternating current bus, the load capacity of the first alternating current bus is less than or equal to a total capacity of the alternating current power supply units to be connected at this time and all alternating current power supply units that have been connected to the first alternating current bus.

It should be noted that the device capacity of the alternating current power supply unit may be related to a maximum current that can be borne by hardware of the alternating current power supply unit. For example, a device capacity S of an alternating current power supply unit is equal to an alternating current voltage $V$ output by the alternating current power supply unit multiplied by a maximum current $I_{max}$ (that is, $S = VI_{max}$). In other words, the capacity of the alternating current power supply unit is linear to a value of the output alternating current voltage. The load capacity of the first alternating current bus is related to a line capacity on the first alternating current bus and a load capacity that may be included. Because load (namely, the black start load described above) of the first alternating current bus is capacitive, the load capacity on the first alternating current bus is linear to the square of a voltage on the first alternating current bus.

The general controller may divide the at least one secondary alternating current power supply unit into a plurality of secondary alternating current power supply unit groups. For example, the general controller may group the secondary alternating current power supply units based on features such as a quantity and a device capacity of the secondary alternating current power supply units. Switch-on voltage values corresponding to secondary alternating current power supply units included in each of the plurality of secondary alternating current power supply unit groups are the same. To be specific, the at least one secondary alternating current power supply unit may be connected to the first alternating current bus bar in batches. This can reduce a quantity of times that the secondary alternating current power supply units are connected to the first alternating current bus, and reduce impact on the power system due to the fact that the secondary alternating current power supply unit is connected to the first alternating current bus.

The general controller may determine a switch-on voltage value corresponding to each group of secondary alternating current power supply units. For ease of description, in this embodiment of this application, the at least one secondary alternating current power supply unit is divided into N secondary alternating current power supply unit groups, switch-on voltage values corresponding to the N secondary alternating current power supply unit groups successively increase, N is a positive integer greater than 1, and i is a positive integer less than or equal to N. A switch-on voltage value corresponding to an i$^{th}$ secondary alternating current power supply unit group may meet the following conditions:

$$V_{mrg}^{i-1} \leq V_{mrg}^{i}, V_{mrg}^{i} \leq V_{max}^{i}, 2 \leq i \leq N,$$

where

$V_{mrg}^{i}$ indicates the switch-on voltage value corresponding to the i$^{th}$ secondary alternating current power supply unit group.

$V_{max}^{i}$ indicates a third threshold corresponding to the i$^{th}$ secondary alternating current power supply unit group (the third threshold is a maximum value that can be obtained from switch-on voltage values of the alternating current power supply units, and for ease of reading, the third threshold is sometimes referred to as a voltage threshold below), where $V_{max}^{i}$ meets:

$$S^{i}(V_{max}^{i}) = S(V_{max}^{i}),$$

where

$S^{i}(V_{max}^{i})$ indicates a sum, corresponding to a case in which values of voltages output by secondary alternating current power supply units in the first i secondary alternating current power supply unit groups in the N secondary alternating current power supply unit groups each are $V_{max}^{i}$ and a value of a voltage output by the primary alternating current power supply unit is $V_{max}^{i}$, of capacities output by the secondary alternating current power supply units in the first i secondary alternating current power supply unit groups and a capacity output by the primary alternating current power supply unit, and

$S(V_{max}^{i})$ indicates the load capacity of the first alternating current bus corresponding to a case in which the voltage value on the first alternating current bus is $V_{max}^{i}$.

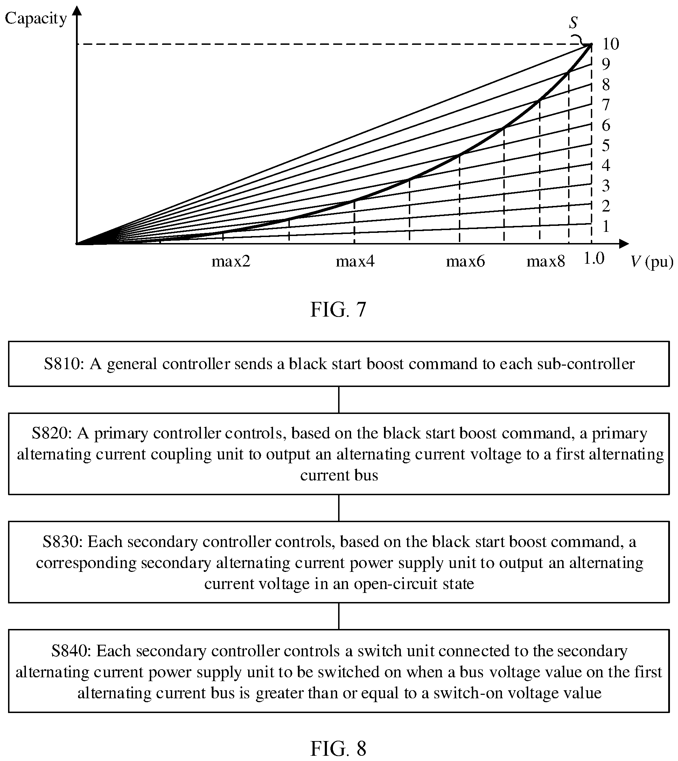

For ease of understanding this embodiment of this application, the following describes the foregoing conditions with reference to FIG. 7. FIG. 7 is a schematic diagram of a relationship between a device capacity, a load capacity, and a voltage. In this example, a power system includes 10 alternating current power supply units, and device capacities of the alternating current power supply units are the same. A horizontal coordinate indicates a value of the alternating current voltage, and the value of the alternating current voltage is a voltage value on a first alternating current bus. It may be understood that, because a secondary alternating current power supply unit is in an accompanying state, a value of the alternating current voltage output by the secondary alternating current power supply unit is controlled to keep consistent with an alternating current voltage on the first alternating current bus. Straight lines 1 to 10 indicate respectively relationships between a total device capacity of one to ten alternating current power supply units and the value of the alternating current voltage. A curve S indicates a relationship between a load capacity on the first alternating current bus and the value of the alternating current voltage. It can be learned that, as the value of the alternating current voltage on the first alternating current bus gradually increases, the load capacity on the first alternating current bus changes increasingly fast.

The general controller may determine 10 voltage thresholds max1 to max10 based on the intersection points of the straight lines 1 to 10 and the curve S respectively. Before the voltage value on the first alternating current bus reaches max(j), a total quantity of alternating current power supply units that need to be connected to the first alternating current bus is greater than or equal to j, where $10 \geq j \geq 1$. For example, before the voltage value on the first alternating current bus reaches max4, at least four alternating current power supply units may be connected to the power system.

The general controller may select a voltage threshold corresponding to each secondary alternating current power supply unit group from the 10 voltage thresholds based on a quantity of secondary alternating current power supply unit groups in each secondary alternating current power supply unit group. FIG. 7 is still used as an example. The 10 alternating current power supply units include one primary alternating current power supply unit and nine secondary alternating current power supply units. The nine secondary alternating current power supply units are divided into three secondary alternating current power supply unit groups. Each group includes three secondary alternating current power supply units. The primary alternating current power supply unit is first connected to the first alternating current bus, and the three groups of secondary alternating current power supply units are successively connected to the first alternating current bus. A switch-on voltage value $V_{mrg}^1$ of a first group may meet $V_{mrg}^1 \leq V_{max}^1 = max4$. A switch-on voltage value $V_{mrg}^2$ of a second group of secondary alternating current power supply units meets $V_{mrg}^2 \leq V_{max}^2 = max7$, and a switch-on voltage value $V_{mrg}^3$ of a third group of secondary alternating current power supply units may meet $V_{mrg}^3 \leq V_{max}^3 = max10$. Therefore, a maximum switch-on voltage value (namely, the voltage threshold) of each secondary alternating current power supply unit can be set for the power system, so that when the secondary alternating current power supply unit is connected to the first alternating current bus, the load capacity of the first alternating current bus is less than or equal to a total capacity of the alternating current power supply unit to be connected this time and all alternating current power supply units that have been connected to the first alternating current bus. To be specific, the switch-on voltage value designed in the technical solution can reduce the circumstance that a connected alternating current power supply unit cannot support the load capacity of the first alternating current bus because the secondary alternating current power supply unit is connected too late, to improve reliability of start of the power system.

It may be understood that the foregoing is merely an example for ease of understanding of this embodiment of this application, and imposes no limitation on this application. For example, for alternating current power supply units with different device capacities, a switch-on voltage value may also be determined by using the foregoing method.

S650: The general controller sends an identity command to each sub-controller. Correspondingly, each sub-controller receives the identity command from the general controller.

The identity command may indicate an alternating current power supply unit as the primary alternating current power supply unit and an alternating current power supply unit as the secondary alternating current power supply unit. The identity command may also indicate a switch-on voltage value corresponding to each secondary alternating current power supply unit.

The general controller may send the identity command through broadcasting, or the general controller may send a primary identity command to a primary controller, and separately send a secondary identity command to at least one secondary controller. This is not specifically limited in this application.

S660: The primary controller controls a switch unit connected to the primary alternating current power supply unit to enter a switched-on state.

After learning, based on the identity command, that the primary controller is the primary alternating current coupling unit, the primary controller may control a corresponding switch unit to enter a switched-on state, so that the primary alternating current power supply unit is electrically connected to the first alternating current bus. Alternatively, the general controller may control the switch unit corresponding to the primary alternating curre nt power supply unit to enter the switched-on state.

S670: The general controller sends a black start voltage establishing command to each sub-controller. Correspondingly, each sub-controller receives the black start voltage establishing command from the general controller.

The black start voltage establishing command may indicate the alternating current power supply unit to output an alternating current voltage of an initial voltage value $V_{init}$. For example, the initial voltage value may be 0.01 per unit (per unit, pu) to 0.02 pu. To be specific, the general controller may control the plurality of alternating current power supply units to first output a small voltage value before being connected to the first alternating current bus, to reduce impact on an electronic component in a subsequent black start process.

S680: The plurality of alternating current power supply units output alternating current voltages with initial voltage values respectively.

Each alternating current power supply unit controls the output alternating current voltage to the initial voltage value $V_{init}$.

The black start preparation phase of the power system is described above. After the black start preparation phase of the power system, each alternating current power supply unit in the power system outputs an alternating current voltage with an initial voltage value. The primary alternating current power supply unit is electrically connected to the first alternating current bus and runs with load. The secondary alternating current power supply unit is disconnected from the first alternating current bus and runs without load. The power system may enter the black start boost phase. The following describes the black start boost phase.

FIG. 8 is a schematic flowchart of a black start boost phase according to an embodiment of this application.

S810: A general controller sends a black start boost command to each sub-controller.

Correspondingly, each sub-controller receives the black start boost command from the general controller.

The general control may send the black start boost command to the sub-controllers (which include a primary controller in a primary alternating current coupling unit and a secondary controller in a secondary alternating current coupling unit) through broadcasting.

S820: The primary controller controls, based on the black start boost command, a primary alternating current power supply unit to output an alternating current voltage to a first alternating current bus.

The primary alternating current power supply unit may control the output alternating current voltage in a plurality of manners. The following describes an example of a possible control manner. For example, the primary controller may generate, based on the black start boost command, first command values for a plurality of times at a first step (for ease of reading, the first command value is sometimes referred to as a master unit voltage command value below), to control a voltage value of an output end of the primary alternating current power supply unit to reach the master unit voltage command value. It should be noted that, because the primary alternating current power supply unit runs with load, the value of the voltage output by the primary alternating current power supply unit may be slightly less than a corresponding master unit voltage command value.

A moment at which the primary alternating current power supply unit generates the master unit voltage command value may be preconfigured, or the primary alternating current power supply unit may detect the alternating current voltage on the first alternating current bus, and generate the master unit voltage command value once each time when a phase of the alternating current voltage of the first alternating current bus is zero. An increment between master unit voltage command values generated at two consecutive times is a first step $V_{step}$, and a master unit voltage command value generated at an $n^{th}$ time may be $V_o = V_{init} + nV_{step}$, where $V_{init}$ is an initial voltage value, and n may be referred to as a quantity of steps. Therefore, the primary alternating current power supply unit may control the output alternating current voltage to linearly rise at a first rate based on the master unit voltage command values generated for a plurality of times, where the first rate may be a ratio of the first step to time between two consecutive times of generating the master unit voltage command value.

The first step or the first rate may be determined based on black start time, and the black start time is time for a voltage value on the first alternating current bus to linearly rise to a rated voltage value from zero (or a value of an initial voltage output by the primary alternating current power supply unit). The black start time may be determined based on a rated alternating current voltage of the first alternating current bus and a parameter of a transformer. The parameter of the transformer may be a parameter of a booster transformer coupled to the first alternating current bus.

For example, flux $\phi$ of the transformer and time t meet the following relationship:

$$\phi = \frac{\phi_m}{T_{st}} t\sin(\omega t + \alpha) + \frac{\phi_m}{\omega T_{st}}\cos(\omega t + \alpha) + Ae^{-\frac{R_1}{L_1}t}$$

where $T_{st}$ indicates the black start time, $\omega$ indicates a system frequency (namely, an alternating current voltage frequency), $\alpha$ indicates an initial phase angle of the alternating current voltage on the first alternating current bus, $R_1$ indicates resistance of a low voltage side winding of the transformer, $L_1$ indicates inductance of the low voltage side winding of the transformer, $\phi_m$ indicates steady-state flux of the transformer, and $A$ indicates an attenuation component. The steady-state flux $\phi_m$ of the transformer can be expressed as:

$$\phi_{\mathrm{m}} = \frac{U_m}{N_1 \sqrt{\omega^2 + \left(\frac{R_1}{L_1}\right)^2}}$$

where $U_m$ indicates a steady-state voltage amplitude of the transformer, and $N_1$ indicates a quantity of turns of the low-voltage side winding of the transformer. The attenuation component $A$ is expressed as:

$$A = \phi_0 - \frac{\phi_m}{\omega T_{st}} \cos(\alpha)$$

where $\phi_0$ is residual flux of the transformer.

It can be learned that the black start time $T_{st}$ and the parameter of the transformer (which includes the residual flux $\phi_0$, the steady-state flux $\phi_m$ the system frequency $\omega$, the resistance $R_1$, inductance $L_1$, and quantity $N_1$ of turns of the low-voltage side winding) and meet a relationship described in the foregoing formula.

The general controller may determine, based on saturation flux $\phi_{saturation}$ of the transformer, a condition that the flux $\phi$ of the transformer meets, so that an excitation inrush current of the transformer falls within an appropriate range. For example, the flux $\phi$ of the transformer is the saturation flux $\phi_{saturation}$, and the following condition is met:

$$\phi_{saturation} = (1.2 - 1.4)\phi_m$$

The general controller may determine the black start time $T_{st}$ based on the foregoing relationship between the black start time $T_{st}$ and the flux $\phi$ of the transformer. It is known that a start step $V_{step}$ for generating the master unit voltage command value by the primary alternating current power supply unit is related to the black start time $T_{st}$ and a periodicity $T$ for generating the master unit voltage command value. For example, if the primary alternating current power supply unit generates the master unit voltage command value once at each moment at which the phase of the alternating current voltage of the first alternating current bus reaches zero, there is the following relationship between the periodicity $T$ for generating the voltage value and the system frequency $\omega$: $T = \pi/\omega$. When the black start time $T_{st}$ is determined, the start step $V_{step}$ may be determined based on the black start time $T_{st}$, the periodicity $T$, and the rated voltage value $V_n$ of the first alternating current bus. For example, $V_{step} = V_n/(T_{st}/T)$.

S830: Each secondary controller controls, based on the black start boost command, a corresponding secondary alternating current power supply unit to output an alternating current voltage in an open-circuit state.

Each secondary controller may control the alternating current voltage output by the secondary alternating current power supply unit in a plurality of manners, for example, a synchronization control method such as VSG or droop control, so that an amplitude, a frequency, and a phase of the output alternating current voltage can linearly rise synchronously with a bus voltage value, a bus voltage frequency, and a bus phase on the first alternating current bus. For ease of description, the following uses a possible control manner of one secondary alternating current power supply unit for description.

For example, after receiving the black start boost command, a sub-controller in the secondary alternating current power supply unit may detect the alternating current voltage on the first alternating current bus. When a value of the alternating current voltage on the first alternating current bus is greater than or equal to a threshold voltage value $V_{th}$, the threshold voltage value $V_{th}$ may be preconfigured, or may be determined by the general controller based on a switch-on voltage value. Threshold voltage values of different secondary alternating current power supply units may be the same or may be different. This is not specifically limited in this application. The secondary controller may perform the following steps.

Step 1: Control the output alternating current voltage to be greater than or equal to the threshold voltage value $V_{th}$.

For example, if the secondary controller is configured to generate second command values for a plurality of times at the start step $V_{step}$ (for ease of reading, the second command value is sometimes referred to as a slave unit voltage command value below), to perform soft start, the secondary controller may adjust the quantity of steps, so that the output voltage is greater than or equal to the threshold voltage value $V_{th}$, where $V_o = V_{init} + nV_{step} \geq V_{th}$, and the quantity of steps n is a smallest integer meeting the foregoing expression. The adjusting the quantity of steps may refer to adjusting the periodicity for generating the master unit voltage command value. For example, the secondary controller may configure soft start time, and adjust, based on the soft start time and the start step, a quantity of steps for generating the master unit voltage command value, so that the alternating current voltage output by the secondary alternating current power supply unit is greater than or equal to the threshold voltage value within the soft start time, to implement soft start of the secondary alternating current power supply unit.

Step 2: Control the output alternating current voltage to gradually rise at the start step.

For example, after a value of the alternating current voltage output by the secondary alternating current power supply unit is greater than or equal to the threshold voltage value, the secondary controller may detect the bus voltage value of the first alternating current bus, and generate the slave unit voltage command value based on the bus voltage value, so that the output alternating current voltage gradually rises at the start step.

Step 3: Enter a synchronization control mode.

The secondary controller may use a plurality of synchronization control modes, so that an amplitude, a frequency, and a phase of the output alternating current voltage may linearly rise synchronously with an amplitude, a frequency, and a phase of the bus voltage on the first alternating current bus. For example, the secondary controller may adjust the output voltage of the secondary alternating current power supply unit in a pi control manner, so that the output voltage is consistent with the bus voltage on the first alternating current bus.

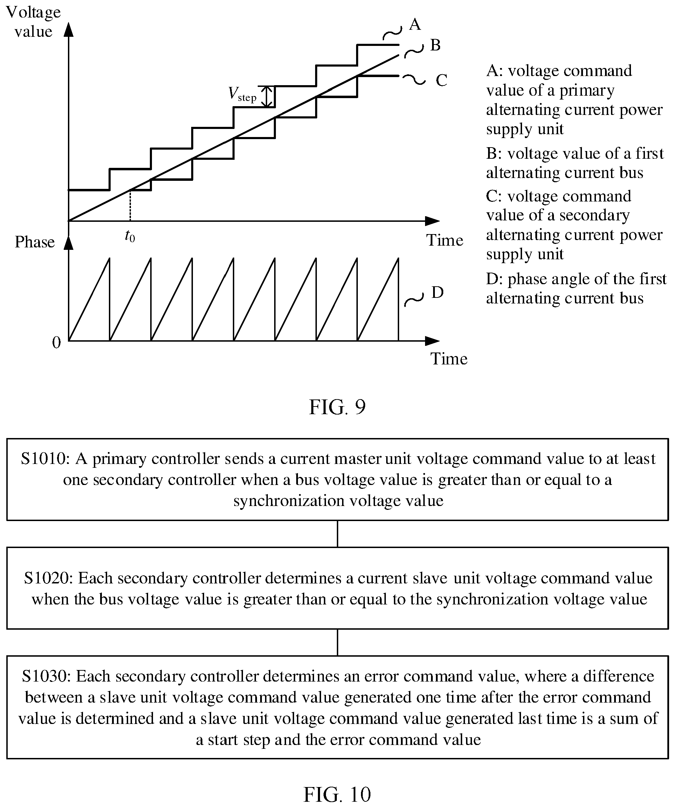

The manner in which the sub-controllers in the alternating current power supply units (which include the primary alternating current power supply unit and the secondary alternating current power supply unit) control the output alternating current voltage by using the voltage command value is described above. For ease of understanding an implementation of controlling the output voltage by outputting the voltage command value, FIG. 9 is a schematic description diagram in which a primary controller generates a master unit voltage command value and a secondary controller generates a slave unit voltage command value.

Refer to FIG. 9. At each moment at which a phase angle (as shown by a broken line D) of an alternating current voltage on a first alternating current bus is zero, the primary controller generates the master unit voltage command value once (as shown by a broken line A), and a difference between two adjacent master unit voltage command values is a start step. The secondary controller enters a synchronization control mode starting from a moment $t_0$, a generated slave unit voltage command value is a bus voltage value at the moment $t_0$ (as shown by a straight line B), and the slave unit voltage command value is subsequently updated at the start step (as shown by a broken line C) at each moment at which a phase of a bus voltage reaches zero. Therefore, sub-controllers in a plurality of alternating current power supply units control, by generating the voltage command values, alternating current voltage outputs by the alternating current power supply units, so that the voltage on the first alternating current bus linearly rises.

It should be noted that, because a primary alternating current power supply unit runs with load, an actual value of the alternating current voltage output by the primary alternating current power supply unit is slightly less than the master unit voltage command value. Because a secondary alternating current power supply unit runs without load before being connected to the first alternating current bus, an actual value of the alternating current voltage output by the secondary alternating current power supply unit is substantially equal to the slave unit voltage command value.

S840: Each secondary controller controls a switch unit connected to the secondary alternating current power supply unit to be switched on when the bus voltage value on the first alternating current bus is greater than or equal to the switch-on voltage value.

The secondary controller in each secondary alternating current power supply unit may detect the voltage on the first alternating current bus, and when the voltage on the first alternating current bus reaches a corresponding switch-on voltage value, control a corresponding switch unit to be switched on, to connect the secondary alternating current power supply unit to the first alternating current bus. Therefore, at least one secondary alternating current power supply unit can be connected to the first alternating current bus in batches, and the alternating current power supply units connected to the first alternating current bus jointly output alternating current voltages, to establish a rated voltage of the first alternating current bus.

It should be noted that, all of the at least one secondary alternating current power supply unit may be connected to the first alternating current bus before the first alternating current bus reaches the rated voltage. Alternatively, some alternating current power supply units are connected to the first alternating current bus before the first alternating current bus reaches the rated voltage, and some alternating current power supply units are connected to the first alternating current bus after the first alternating current bus reaches the rated voltage. This is not specifically limited in this application.

The black start boost phase of the power system is described above. After the black start boost phase of the power system, each alternating current power supply unit in the power system is connected to the first alternating current bus, and the first alternating current bus gradually rises to the rated voltage at the first rate, to complete the black start of the power system.

It should be noted that when the plurality of alternating current power supply units are connected to the first alternating current bus, the plurality of alternating current power supply units run in parallel, and the plurality of alternating current power supply units share black start load together. If impedances of the alternating current power supply units may be considered to be basically the same, proportion of black start load shared by the plurality of alternating current power supply units is related to voltage command values of the plurality of alternating current power supply units. When the voltage command values of the plurality of alternating current power supply units are the same, the alternating current power supply units can share the black start load evenly, so that power distribution can be performed evenly, and the reliability of the black start of the power system can be improved.

In the foregoing description of the black start boost phase, an embodiment of this application provides a method for controlling an output voltage by an alternating current power supply unit by using a voltage command value. In the method, the primary alternating current power supply unit generates a voltage command value at the start step at a moment at which the phase of the voltage of the first alternating current bus reaches zero; and the secondary alternating current power supply unit generates a voltage command value at the same start step at the moment at which the phase of the voltage of the first alternating current bus reaches zero. Because the primary alternating current power supply unit runs with load, there is a voltage drop between the master unit voltage command value of the primary alternating current power supply unit and the bus voltage value, so that the master unit voltage command value and the slave unit voltage command value are not synchronized. In addition, as shown in FIG. 9, the primary alternating current power supply unit and the secondary alternating current power supply unit generate the voltage command values at different start moments, for example, the primary alternating current power supply unit generates the voltage command value at a beginning moment of the black start boost phase at the start step, and the secondary alternating current power supply unit is started at a moment $t_0$. Therefore, the master unit voltage command value and the slave unit voltage command value are not synchronized.

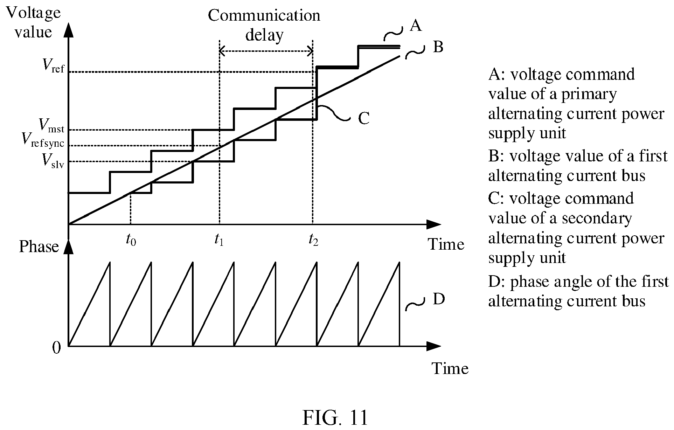

To implement that the plurality of alternating current power supply units can evenly share the black start load, an embodiment of this application further provides a command synchronization method. Command synchronization may occur in the black start boost phase. The following describes the command synchronization method with reference to FIG. 10 and FIG. 11.

FIG. 10 is a schematic flowchart of the command synchronization method according to an embodiment of this application.

S1010: A primary controller sends a current master unit voltage command value to at least one secondary controller when a bus voltage value is greater than or equal to a fourth threshold.

The current master unit voltage command value is a master unit voltage command value of a primary alternating current power supply unit when the voltage value of a first alternating current bus is greater than or equal to the fourth threshold. To be specific, the primary controller may detect a voltage of the alternating current bus, and when the voltage of the alternating current bus reaches the fourth threshold, record a master unit voltage command value generated last time before the bus voltage value reaches the fourth threshold as the current master unit voltage command value, and may broadcast the current master unit voltage command value to the secondary controller.

The fourth threshold may be used to determine an occasion on which the primary controller and the secondary controller perform command synchronization. For ease of reading, the fourth threshold is sometimes referred to as a synchronization voltage value below. The synchronization voltage value may be preconfigured. For example, the synchronization voltage value may be less than or equal to a preset threshold, for example, the synchronization voltage value may be less than or equal to 0.5 pu.

S1020: Each secondary controller determines a current slave unit voltage command value when the bus voltage value is greater than or equal to the synchronization voltage value.

The secondary controller may detect the voltage value of the alternating current bus, when the bus voltage value is greater than or equal to the synchronization voltage value, record a slave unit voltage command value generated last time before the bus voltage value reaches the synchronization voltage value, and record the current slave unit voltage command value.

S1030: Each secondary controller determines an error command value, where the error command value is a difference between the current master unit voltage command value and the current slave unit voltage command value, and a difference between a slave unit voltage command value generated one time after the error command value is determined and a slave unit voltage command value generated last time is a sum of a start step and the error command value.

For example, after receiving the current master unit voltage command value sent by the primary controller through broadcasting, each secondary controller may determine a difference between the current master unit voltage command value and a current slave unit voltage command value of each secondary controller. For ease of description, the difference is referred to as the error command value below. After obtaining the error command value, each secondary controller may update a subsequent slave unit voltage command value. For example, the secondary controller may superimpose the start step and the error command value when generating the slave unit voltage command value subsequently. To facilitate understanding of this embodiment of this application, the following describes, with reference to FIG. 11, an example of command synchronization performed by a primary alternating current power supply unit and a secondary alternating current power supply unit.

FIG. 11 is a schematic diagram for describing the command synchronization method according to an embodiment of this application. Refer to FIG. 11. For meanings of lines A, B, C, and D, refer to the description in FIG. 9. Details are not described herein again. The primary controller detects that the voltage of the alternating current bus reaches the voltage synchronization value $V_{\text{refsyn}}$ at a moment $t_1$, records the current master unit voltage command value $V_{\text{mst}}$,

and sends the current master unit voltage command value $V_{mst}$ to the secondary controller. The secondary controller detects that the voltage of the alternating current bus reaches the voltage comparison value $V_{refsyn}$ at the moment $t_1$, and records a current slave unit voltage command value $V_{slv}$. After a period of communication delay, the secondary controller receives the current master unit voltage command value $V_{mst}$ at a moment $t_2$, and therefore determines that the error command value is $V_{mst}$-$V_{slv}$. When the secondary controller generates a slave unit voltage command value after the moment $t_2$, the secondary controller may generate the slave unit voltage command value by superimposing the start step and the error command value, so that the voltage command values generated by the secondary controller and the primary controller are close, and alternating current power supply units can evenly share the black start load, to improve the reliability of the start of the power system.

It should be noted that a plurality of synchronization voltage values may be set for the power system, for example, three synchronization voltage values (0.1 pu, 0.2 pu, and 0.3 pu) are set. In this case, the steps in the method shown in FIG. 10 may be performed three times. For example, the primary controller broadcasts the current master unit voltage command value once when the bus voltage value reaches 0.1 pu, broadcasts the current master unit voltage command value again when the bus voltage value reaches 0.2 pu, and broadcasts the current master unit voltage command value once again when the bus voltage value reaches 0.3 pu. The secondary controller records current slave unit voltage command values respectively when the bus voltage value reaches 0.1 pu, 0.2 pu, and 0.3 pu, and generates a subsequent slave unit voltage command value based on the error command value each time after receiving the current master unit voltage command value sent by the primary controller. This is not specifically limited in this application.

The foregoing describes the black start process of the power system in phases. For ease of understanding of this embodiment of this application, the following briefly describes, by using the power system shown in FIG. 3 as an example, a process in which the rated voltage of 110 kV may be established by the three microgrids by using the foregoing method. For more details, refer to the foregoing description. The microgrid SS-1 is a primary alternating current power supply unit, the microgrid SS-2 and the microgrid SS-3 are secondary alternating current power supply units, an initial voltage value $V_{init}$ is 0.01 pu, a threshold voltage value $V_{th}$ is 0.05 pu, a switch-on voltage value $V_{mrg}$(SS-2) of the microgrid SS-2 is 0.1 pu, a switch-on voltage value $V_{mrg}$(SS-3) of the microgrid SS-3 is 0.3 pu, and three synchronous voltage values are as follows: $V_{refsync1}$ = 0.1 pu, $V_{refsync2}$ = 0.2 pu, and $V_{refsync3}$ = 0.3 pu.

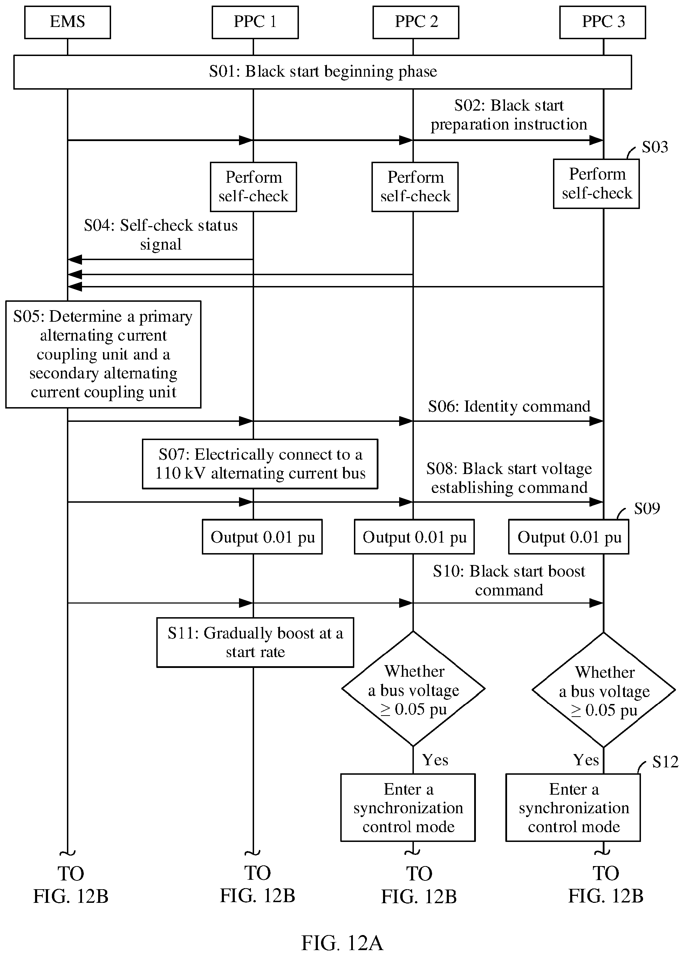

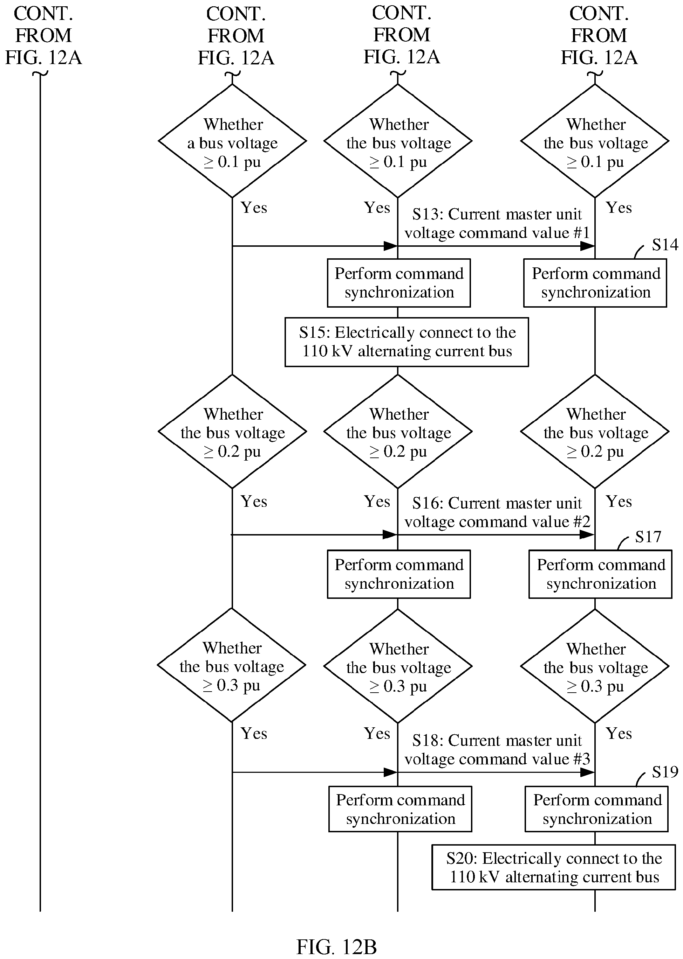

FIG. 12A and FIG. 12B are a schematic flowchart of an example in which the foregoing micro grids SS-1, SS-2, and SS-3 perform black start.

S01: The EMS determines to perform a black start beginning phase.

QF11 to QF17, QF21 to QF27, and QF31 to QF37 in the power system are switched off. QF17, QF27, and QF37 in the power system are switched on, that is, the 33 kV/110 kV boost transformer in the power system is connected to the 110 kV alternating current bus.

QF11 to QF14, QF21 to QF24, and QF31 to QF34 in the power system are switched on, and all the PCSs in the power system are connected to the 33 kV alternating current bus.

S02: The EMS broadcasts a black start preparation command.

It should be noted that, in this embodiment of this application, broadcasting a command by the EMS means that the EMS sends the command to the PPC 1 to the PPC 3, the PPC 1 forwards the command to the SACU 11 and the SACU 12, the PPC 2 forwards the command to the SACU 21 and the SACU 22, and the PPC 3 forwards command to the SACU 31 and the SACU 32, and each SACU controls a corresponding PCS based on the command.

S03: All the PCSs in the power system perform self-check, to generate self-check status signals.

S04: All the PCSs in the power system send the self-check status signals to the EMS.

S05: The EMS selects, based on the self-check status signals uploaded by the PCS, the micro grid SS-1 as a primary alternating current voltage unit, and the micro grids SS-2 and SS-3 as secondary alternating current voltage units.

S06: The EMS sends an identity command to the PPC 1, the PPC 2, and the PPC 3.

The EMS may broadcast the identity command indicating the microgrid as the primary alternating current voltage unit and the microgrid as the secondary alternating current voltage unit. Alternatively, the EMS may separately send the identity command to the PPC 1, the PPC 2, and the PPC 3, to separately indicate that a corresponding microgrid is the primary alternating current power supply unit or the secondary alternating current power supply unit.

S07: The PPC 1 controls SS-1 to electrically connect to the 110 kV alternating current bus.

QF16 in SS-1 is switched on, and SS-1 is connected to the 110 kV alternating current bus.

S08: The EMS broadcasts a black start voltage establishing command.

S09: SS-1, SS-2, and SS-3 output initial voltage values $V_{init}$ = 0.01 pu respectively.

For example, the PPCs 1 to 3 control corresponding PCSs respectively to perform black start synchronously, so that voltages of the 33kV-1, 33kV-2, and 33kV-3 buses reach the initial voltage value $V_{init}$ = 0.01 pu.

S10: The EMS broadcasts a black start boost command.

S11: SS-1 gradually boosts at a first rate.

For example, SS-1 can implement intra-station synchronous black start by using high-speed communication inside a cluster, all PCS in SS-1 gradually boost output voltages, a voltage of the 110 kV bus gradually rises at a first rate, and all 33 kV/110 kV transformers T13, T23, and T33 are excited.

When a bus voltage is greater than or equal to the threshold voltage value $V_{th}$ = 0.05 pu,

S12: SS-2 and SS-3 enter a synchronization control mode.

For example, SS-2 and SS-3 may perform soft start and enter the synchronization control mode by detecting the bus voltage of the 110 kV alternating current bus. Voltages of the 33 kVbuses in SS-2 and SS-3 gradually rise, and the 800 V/33 kV transformer is excited.

When the bus voltage is greater than or equal to the switch-on voltage value $V_{mrg}$(SS-2) of SS-2 = synchronization voltage value $V_{refsync1}$ = 0.1 pu,

S13: The PPC 1 sends a current master unit voltage command value #1 to the PPC 2 and the PPC 3.

The current master unit voltage command value #1 is a master unit voltage command value obtained when the bus voltage is greater than or equal to 0.1 pu.

S14: The PPC 2 and the PPC 3 separately perform command synchronization.

The PPC 2 and PPC 3 of the microgrids separately record a current slave unit voltage command value #1 when the bus voltage is greater than or equal to 0.1 pu, and generate a subsequent slave unit voltage command value based on the current master unit voltage command value #1 and the current slave unit voltage command value #1.

S15: The PPC 2 controls SS-2 to electrically connect to the 110 kV alternating current bus.

QF26 in the microgrid SS-2 is switched on, and SS-2 is connected to the 110 kV alternating current bus. It may be understood that the step S15 and the step S14 may be performed synchronously.

When the bus voltage is greater than or equal to the synchronization voltage $V_{refsync2}$ = 0.2 pu,

S16: The PPC 1 sends a current master unit voltage command value #2 to the PPC 2 and the PPC 3.

The current master unit voltage command value #1 is a master unit voltage command value obtained when the bus voltage is greater than or equal to 0.2 pu.

S17: The PPC 2 and the PPC 3 separately perform command synchronization.

The PPC 2 and PPC 3 of the microgrids separately record a current slave unit voltage command value #2 when the bus voltage is greater than or equal to 0.2 pu, and generate a subsequent slave unit voltage command value based on the current master unit voltage command value #2 and the current slave unit voltage command value #2.

When the bus voltage is greater than or equal to the switch-on voltage value $V_{mrg}$(SS-3) of SS-3 = synchronization voltage value $V_{refsync3}$ = 0.3 pu,

S18: The PPC 1 sends a current master unit voltage command value #3 to the PPC 2 and the PPC 3.

The current master unit voltage command value #3 is a master unit voltage command value obtained when the bus voltage is greater than or equal to 0.3 pu.

S19: The PPC 2 and the PPC 3 separately perform command synchronization.

The PPC 2 and PPC 3 of the microgrids separately record a current slave unit voltage command value #3 when the bus voltage is greater than or equal to 0.3 pu, and generate a subsequent slave unit voltage command value based on the current master unit voltage command value #3 and the current slave unit voltage command value #3.

S20: The PPC 3 controls SS-3 to electrically connect to the 110 kV alternating current bus.

QF36 in the microgrid SS-2 is switched on, and SS-3 is connected to the 110 kV alternating current bus. The step S19 and the step S20 may be performed synchronously.

It should be noted that the start method shown in FIG. 12A and FIG. 12B is merely an example for ease of understanding this embodiment of this application. This is not specifically limited in this application.

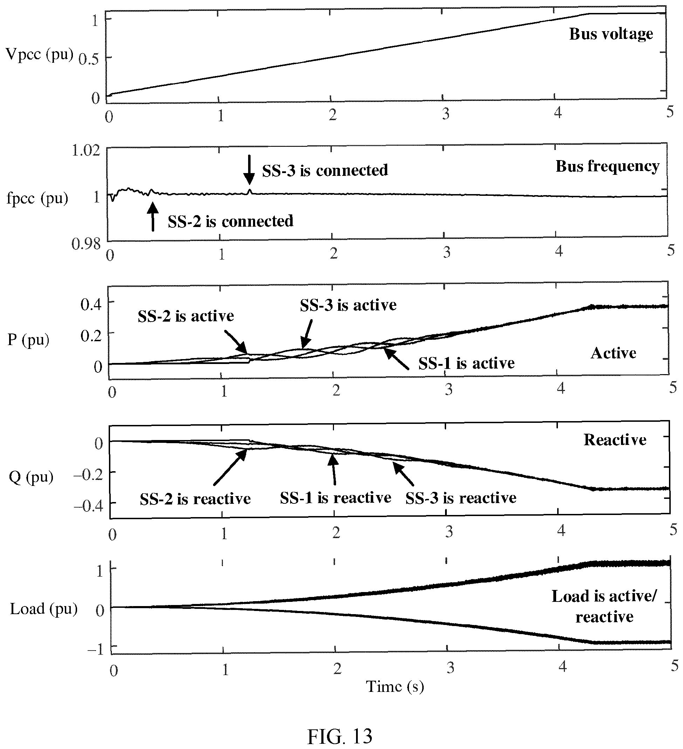

To facilitate understanding of technical effects of embodiments of this application, FIG. 13 sequentially shows a waveform diagram of a 110 kVbus voltage of a power system, a waveform diagram of a 110 kVbus frequency, an active power waveform diagram of a power system, a reactive power waveform diagram of a power system, an active power diagram of load, and a reactive power diagram of load. It can be known that SS-2 is connected when the bus voltage reaches 0.1 pu, and SS-3 is connected when the bus voltage reaches 0.3 pu. At moments at which SS-2 and SS-3 are connected, the bus frequency fluctuates momently and slightly. At an initial phase of black start, there is a part of gradually attenuation circulating current between the primary alternating current power supply unit and the secondary alternating current power supply unit and between the secondary alternating current power supply units that are connected at different moments. When the voltage reaches about 0.7 pu, the power of the alternating current power supply units is evenly distributed. After 4.2s, the black start of the power system is completed and all the alternating current power supply units run stably. Therefore, according to the power system and the method for starting a power system provided in embodiments of this application, use of high-speed communication lines can be reduced, a requirement for a capacity of a single alternating current power supply unit device can be reduced, and hardware costs can be reduced. Moreover, the platform period (period in which the voltage value of the alternating current bus remains unchanged) for connecting the secondary alternating current power supply unit does not need to be set for the power system. The secondary alternating current power supply unit may be connected to the first alternating current bus when the voltage value of the first alternating current bus linearly rises, to reduce time for completing start.

A person of ordinary skill in the art may be aware that units and algorithm steps in the examples described with reference to embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in other manners. For example, the foregoing described apparatus embodiments are merely examples. For example, division into the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes a plurality of instructions for instructing a computer device (which may be, for example, a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A power system, wherein the power system comprises a first alternating current bus, a plurality of alternating current power supply units, a plurality of switch units, and at least one controller, wherein the plurality of alternating current power supply units are connected to the first alternating current bus by using the plurality of switch units respectively, the plurality of alternating current power supply units are configured to supply electric energy to the first alternating current bus, and the plurality of alternating current power supply units comprise a primary alternating current power supply unit and at least one secondary alternating current power supply unit;

    the at least one controller is configured to start the primary alternating current power supply unit to output an alternating current voltage to the first alternating current bus when a switch unit connected to the primary alternating current power supply unit is in a switched-on state;
    the at least one controller is configured to start the at least one secondary alternating current power supply unit to output an alternating current voltage in an open-circuit state when a switch unit connected to the at least one secondary alternating current power supply unit is in a switched-off state, and a bus voltage value of the first alternating current bus is greater than or equal to a first threshold and is still in a rise phase; and
    the at least one controller is configured to: when the bus voltage value is greater than or equal to a second threshold and is still in the rise phase, control the switch unit connected to the at least one secondary alternating current power supply unit to enter a switched-on state, to enable the at least one secondary alternating current power supply unit to connect to the first alternating current bus and output an alternating current voltage to the first alternating current bus, wherein the first threshold is less than the second threshold.

2. The power system according to claim 1, wherein a value of the alternating current voltage output by the primary alternating current power supply unit to the first alternating current bus increases at a first rate, and a value of the alternating current voltage output by the secondary alternating current power supply unit in the open-circuit state increases at a second rate, wherein the first rate and the second rate are the same.

3. The power system according to claim 1 or 2, wherein the second threshold is determined based on a device capacity of the at least one secondary alternating current power supply unit and a load capacity of the first alternating current bus.

4. The power system according to claim 3, wherein the at least one secondary alternating current power supply unit is divided into N secondary alternating current power supply unit groups, wherein N is a positive integer greater than 1, second thresholds corresponding to secondary alternating current power supply units comprised in each secondary alternating current power supply unit group are the same, and a second threshold $V_{mrg}^i$ corresponding to an $i^{th}$ secondary alternating current power supply unit group in the N secondary alternating current power supply unit groups meets the following conditions:

$$V_{mrg}^{i-1} \leq V_{mrg}^i, \ V_{mrg}^i \leq V_{max}^i, \ 2 \leq i \leq N,$$

wherein

$V_{mrg}^{i-1}$ indicates a second threshold corresponding to an $(i-1)^{th}$ secondary alternating current power supply unit group in the N secondary alternating current power supply unit groups, $V_{max}^i$ indicates a third threshold corresponding to the $i^{th}$ secondary alternating current power supply unit group, and $V_{max}^i$ meets:

$$S^i(V_{max}^i) = S(V_{max}^i),$$

wherein

$S^i(V_{max}^i)$ indicates a sum, corresponding to a case in which values of voltages output by secondary alternating current power supply units in the first i secondary alternating current power supply unit groups in the N secondary alternating current power supply unit groups each are $V_{max}^i$ and a value of a voltage output by the primary alternating current power supply unit is $V_{max}^i$, of capacities output by the secondary alternating current power supply units in the first i secondary alternating current power supply unit groups and a capacity output by the primary alternating current power supply unit, and
$S(V_{max}^i)$ indicates a load capacity of the first alternating current bus corresponding to a case in which the bus voltage value is $V_{max}^i$.

5. The power system according to any one of claims 1 to 4, wherein a first alternating current power supply unit in the plurality of alternating current power supply units comprises a second alternating current bus and at least one alternating current coupling sub-unit, and the at least one alternating current coupling sub-unit is configured to supply electric energy to the second alternating current bus;

the power system further comprises a transformer unit, wherein the transformer unit comprises a transformer and a transformer switch, a first end of the transformer is connected to the first alternating current bus by using the transformer switch, a second end of the transformer is connected to the second alternating current bus by using a switch unit connected to the first alternating current power supply unit, and the transformer is configured to perform voltage transformation between the first alternating current bus and the corresponding second alternating current bus; and
the at least one controller is further configured to: before starting the primary alternating current power supply unit to output the alternating current voltage to the first alternating current bus, control the transformer switch to enter a switched-on state, to connect the transformer unit to the first alternating current bus.

6. The power system according to claim 5, wherein the first rate is determined based on a rated voltage value of the first alternating current bus and a parameter of the transformer coupled to the first alternating current bus.

7. The power system according to any one of claims 1 to 6, wherein the at least one controller comprises a primary controller and a secondary controller, wherein
the primary controller is specifically configured to:

generate first command values for a plurality of times at a first step, and control, based on the first command values generated for a plurality of times, the primary alternating current power supply unit to output the alternating current voltage to the first alternating current bus, wherein the first step is a difference between first command values generated in two adjacent times, and the first step is related to the first rate; and
the secondary controller is specifically configured to:
generate second command values for a plurality of times at the first step, and control, based on the second command values generated for a plurality of times and a bus voltage of the first alternating current bus, the alternating current voltage output by the secondary alternating current power supply unit in the open-circuit state.

8. The power system according to claim 7, wherein
the primary controller is further configured to:

send a current first command value to the secondary controller when the bus voltage value is greater than or equal to a fourth threshold, wherein the current first command value is a first command value corresponding to a case in which the bus voltage value is greater than or equal to the fourth threshold; and
the secondary controller is further configured to:

determine a current second command value when the bus voltage value is greater than or equal to the fourth threshold, wherein the current second command value is a second command value corresponding to a case in which the bus voltage value is greater than or equal to the fourth threshold; and
determine that a difference between the current first command value and the current second command value is an error command value, and a difference between a second command value generated one time after the error command value is determined and a second command value generated last time is a sum of the first step and the error command value.

9. A method for starting a power system, applied to a power system, wherein the method comprises:

starting a primary alternating current power supply unit to output an alternating current voltage to a first alternating current bus when a switch unit connected to the primary alternating current power supply unit is in a switched-on state, wherein the primary alternating current power supply unit and at least one secondary alternating current power supply unit are separately connected to the first alternating current bus by using a plurality of switch units;
starting the at least one secondary alternating current power supply unit to output an alternating current voltage in an open-circuit state when the switch unit connected to the secondary alternating current power supply unit is in a switched-off state, and a bus voltage value of the first alternating current bus is greater than or equal to a first threshold and is still in a rise phase; and
when the bus voltage value of the first alternating current bus is greater than or equal to a second threshold and is still in the rise phase, controlling the switch unit connected to the at least one secondary alternating current power supply unit to enter a switched-on state, to enable the at least one secondary alternating current power supply unit to connect to the first alternating current bus and output an alternating current voltage to the first alternating current bus, wherein the first threshold is less than the second threshold.

10. The method according to claim 9, wherein a value of the alternating current voltage output by the primary alternating current power supply unit to the first alternating current bus increases at a first rate, and a value of the alternating current voltage output by the secondary alternating current power supply unit in the open-circuit state increases at a second rate, wherein the first rate and the second rate are the same.

11. The method according to claim 9 or 10, wherein the second threshold is determined based on a device capacity of the at least one secondary alternating current power supply unit and a load capacity of the first alternating current bus.

12. The method according to claim 11, wherein the at least one secondary alternating current power supply unit is divided into N secondary alternating current power supply unit groups, wherein N is a positive integer greater than 1, second thresholds corresponding to secondary alternating current power supply units comprised in each secondary alternating current power supply unit group are the same, and a second threshold $V_{mrg}^i$ corresponding to an $i^{th}$ secondary alternating current power supply unit group in the N secondary alternating current power supply unit groups meets the following conditions:

$$V_{mrg}^{i-1} \leq V_{mrg}^{i},\ V_{mrg}^{i} \leq V_{max}^{i},\ 2 \leq i \leq N,$$

wherein

$V_{mrg}^{i-1}$ indicates a second threshold corresponding to an $(i-1)^{th}$ secondary alternating current power supply unit group in the N secondary alternating current power supply unit groups, $V_{max}^{i}$ indicates a third threshold corresponding to the $i^{th}$ secondary alternating current power supply unit group, and $V_{max}^{i}$ meets:

$$S^{i}(V_{max}^{i}) = S(V_{max}^{i}),$$

wherein

$S^{i}(V_{max}^{i})$ indicates a sum, corresponding to a case in which values of voltages output by secondary alternating current power supply units in the first i secondary alternating current power supply unit groups in the N secondary alternating current power supply unit groups each are $V_{max}^{i}$ and a value of a voltage output by the primary alternating current power supply unit is $V_{max}^{i}$, of capacities output by the secondary alternating current power supply units in the first i secondary alternating current power supply unit groups and a capacity output by the primary alternating current power supply unit, and
$S(V_{max}^{i})$ indicates a load capacity of the first alternating current bus corresponding to a case in which the bus voltage value is $V_{max}^{i}$.

13. The method according to claims 9 to 12, wherein a first alternating current power supply unit in the plurality of alternating current power supply units comprises a second alternating current bus and at least one alternating current coupling sub-unit, and the at least one alternating current coupling sub-unit is configured to supply electric energy to the second alternating current bus; the power system further comprises a transformer unit, wherein the transformer unit comprises a transformer and a transformer switch, a first end of the transformer is connected to the first alternating current bus by using the transformer switch, a second end of the transformer is connected to the second alternating current bus by using a switch unit connected to the first alternating current power supply unit, and the transformer is configured to perform voltage transformation between the first alternating current bus and the corresponding second alternating current bus; and
the method further comprises:
controlling, by at least one controller before starting the primary alternating current power supply unit to output the alternating current voltage to the first alternating current bus, the transformer switch to enter a switched-on state, to connect the transformer unit to the first alternating current bus.

14. The method according to claim 13, wherein the first rate is determined based on a rated voltage value of the first alternating current bus and a parameter of the transformer coupled to the first alternating current bus.

15. The method according to any one of claims 9 to 14, wherein the at least one controller comprises a primary controller and a secondary controller, wherein
the starting a primary alternating current power supply unit to output an alternating current voltage to a first alternating current bus comprises:

generating, by the primary controller, first command values for a plurality of times at a first step, and controlling, based on the first command values generated for a plurality of times, the primary alternating current power supply unit to output the alternating current voltage to the first alternating current bus, wherein the first step is a difference between first command values generated in two adjacent times, and the first step is related to the first rate; and
the starting the secondary alternating current power supply unit to output an alternating current voltage in an open-circuit state comprises:
generating, by the secondary controller, second command values for a plurality of times at the first step, and controlling, based on the second command values generated for a plurality of times and a bus voltage of the first alternating current bus, the alternating current voltage output by the secondary alternating current power supply unit in the open-circuit state.

FIG. 1

FIG. 2

FIG. 3

S410: At least one controller starts a primary alternating current power supply unit to output an alternating current voltage to a first alternating current bus when a switch unit connected to the primary alternating current power supply unit is in a switched-on state

S420: The at least one controller starts a secondary alternating current power supply unit to output an alternating current voltage in an open-circuit state when a switch unit connected to the secondary alternating current power supply unit is in a switched-off state, and a bus voltage value of the first alternating current bus is greater than or equal to a first threshold

S430: The at least one controller starts the secondary alternating current power supply unit to output an alternating current voltage in an open-circuit state when the bus voltage value of the first alternating current bus is greater than or equal to a second threshold

FIG. 4

S510: A controller controls each switch unit to be switched off, so that each alternating current power supply unit is disconnected from a first alternating current bus

S520: The controller controls a transformer switch in each transformer unit to be switched on, so that each transformer is electrically connected to the first alternating current bus

FIG. 5

S610: A general controller sends a black start preparation command to a sub-controller in each alternating current coupling unit

S620: The sub-controllers perform self-check on the alternating current coupling units respectively, to generate self-check status signals

S630: The sub-controllers send the self-check status signals to the general controller

S640: The general controller determines a primary alternating current coupling unit and a secondary alternating current coupling unit based on the plurality of self-check status signals

S650: The general controller sends an identity command to each sub-controller

S660: A primary controller controls a switch unit connected to a primary alternating current power supply unit to enter a switched-on state

S670: The primary controller sends a black start voltage establishing command to each sub-controller

S680: A plurality of alternating current power supply units output alternating current voltages with initial voltage values respectively

FIG. 6

FIG. 7

| S810: A general controller sends a black start boost command to each sub-controller |

| S820: A primary controller controls, based on the black start boost command, a primary alternating current coupling unit to output an alternating current voltage to a first alternating current bus |

| S830: Each secondary controller controls, based on the black start boost command, a corresponding secondary alternating current power supply unit to output an alternating current voltage in an open-circuit state |

| S840: Each secondary controller controls a switch unit connected to the secondary alternating current power supply unit to be switched on when a bus voltage value on the first alternating current bus is greater than or equal to a switch-on voltage value |

FIG. 8

A: voltage command value of a primary alternating current power supply unit

B: voltage value of a first alternating current bus

C: voltage command value of a secondary alternating current power supply unit

D: phase angle of the first alternating current bus

FIG. 9

| S1010: A primary controller sends a current master unit voltage command value to at least one secondary controller when a bus voltage value is greater than or equal to a synchronization voltage value |
| --- |

| S1020: Each secondary controller determines a current slave unit voltage command value when the bus voltage value is greater than or equal to the synchronization voltage value |
| --- |

| S1030: Each secondary controller determines an error command value, where a difference between a slave unit voltage command value generated one time after the error command value is determined and a slave unit voltage command value generated last time is a sum of a start step and the error command value |
| --- |

FIG. 10

FIG. 11

A: voltage command value of a primary alternating current power supply unit

B: voltage value of a first alternating current bus

C: voltage command value of a secondary alternating current power supply unit

D: phase angle of the first alternating current bus

```
┌─────────┐      ┌─────────┐      ┌─────────┐      ┌─────────┐
│   EMS   │      │  PPC 1  │      │  PPC 2  │      │  PPC 3  │
└─────────┘      └─────────┘      └─────────┘      └─────────┘
```

S01: Black start beginning phase

S02: Black start preparation instruction

S03

Perform self-check | Perform self-check | Perform self-check

S04: Self-check status signal

S05: Determine a primary alternating current coupling unit and a secondary alternating current coupling unit

S06: Identity command

S07: Electrically connect to a 110 kV alternating current bus

S08: Black start voltage establishing command

S09

Output 0.01 pu | Output 0.01 pu | Output 0.01 pu

S10: Black start boost command

S11: Gradually boost at a start rate

Whether a bus voltage ≥ 0.05 pu

Whether a bus voltage ≥ 0.05 pu

Yes

Yes

S12

Enter a synchronization control mode

Enter a synchronization control mode

TO FIG. 12B | TO FIG. 12B | TO FIG. 12B | TO FIG. 12B

FIG. 12A

CONT.
FROM
FIG. 12A

CONT.
FROM
FIG. 12A

CONT.
FROM
FIG. 12A

CONT.
FROM
FIG. 12A

Whether
a bus voltage
≥ 0.1 pu

Whether
the bus voltage
≥ 0.1 pu

Whether
the bus voltage
≥ 0.1 pu

Yes

Yes

Yes

S13: Current master unit
voltage command value #1

S14

Perform command
synchronization

Perform command
synchronization

S15: Electrically connect to the
110 kV alternating current bus

Whether
the bus voltage
≥ 0.2 pu

Whether
the bus voltage
≥ 0.2 pu

Whether
the bus voltage
≥ 0.2 pu

Yes

Yes

Yes

S16: Current master unit
voltage command value #2

S17

Perform command
synchronization

Perform command
synchronization

Whether
the bus voltage
≥ 0.3 pu

Whether
the bus voltage
≥ 0.3 pu

Whether
the bus voltage
≥ 0.3 pu

Yes

Yes

Yes

S18: Current master unit
voltage command value #3

S19

Perform command
synchronization

Perform command
synchronization

S20: Electrically connect to the
110 kV alternating current bus

FIG. 12B

FIG. 13

## EUROPEAN SEARCH REPORT

Europäisches Patentamt
European Patent Office
Office européen des brevets

**Application Number**

EP 24 17 1260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 285 056 A (ZHEJIANG PROVINCE ELECTRIC POWER LTD COMPANY OF STATE GRID AND LIHUI P) 5 April 2022 (2022-04-05) | 1-15 | INV. H02J3/00 H02J3/08 |
| Y | * page 1 - page 6; figures 1-8 * | 4,12 | H02J3/42 |
| A | US 2018/131268 A1 (SOMANI APURVA [US]) 10 May 2018 (2018-05-10) * paragraphs [0001] - [0025]; figures 1-6 * | 1-15 | |
| A | US 2017/214250 A1 (ZIETLOW DANIEL H [US] ET AL) 27 July 2017 (2017-07-27) * paragraphs [0001] - [0015], [0026], [0032] - [0037]; figures 1,2 * | 1-15 | |
| A | WO 2022/166289 A1 (SUNGROW POWER SUPPLY CO LTD [CN]) 11 August 2022 (2022-08-11) * page 1 - page 5; figures 1-10 * | 1-15 | |
| A | ERLINGHAGEN PHILIPP ET AL: "Backup power supply concepts for low-voltage microgrids with directly coupled or inverter-interfaced grid-forming generators", ELECTRICAL ENGINEERING, SPRINGER, BERLIN, DE, vol. 101, no. 2, 18 April 2018 (2018-04-18), pages 291-302, XP036886767, ISSN: 0948-7921, DOI: 10.1007/S00202-018-0694-8 [retrieved on 2018-04-18] * page 291 - page 302 * | 1-15 | |
| A | CN 111 130 102 B (SUNGROW POWER SUPPLY CO LTD) 3 September 2021 (2021-09-03) * page 1 - page 5; figures 1,4 * | 1-15 | |

-/--

**TECHNICAL FIELDS SEARCHED (IPC)**

H02J

The present search report has been drawn up for all claims

| Place of search | Date of completion of the search | Examiner |
|---|---|---|
| Munich | 18 September 2024 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 24 17 1260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 9 454 137 B2 (HONEYWELL INT INC PATENT SERVICES M/S AB/2B [US] ET AL.) 27 September 2016 (2016-09-27) * page 1; figures 1-6 * ----- | 4,12 | |

TECHNICAL FIELDS
SEARCHED      (IPC)

The present search report has been drawn up for all claims

| Place of search | Date of completion of the search | Examiner |
|---|---|---|
| Munich | 18 September 2024 | Krasser, Bernhard |

EPO FORM 1503 03.82 (P04C01)

## ANNEX TO THE EUROPEAN SEARCH REPORT
## ON EUROPEAN PATENT APPLICATION NO.

EP 24 17 1260

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2024

| Patent document cited in search report | | Publication date | Patent family member(s) | | Publication date |
|---|---|---|---|---|---|
| CN 114285056 | A | 05-04-2022 | NONE | | |
| US 2018131268 | A1 | 10-05-2018 | AU | 2017345406 A1 | 03-01-2019 |
| | | | CA | 3027225 A1 | 26-04-2018 |
| | | | CN | 109643897 A | 16-04-2019 |
| | | | EP | 3529873 A1 | 28-08-2019 |
| | | | JP | 6983821 B2 | 17-12-2021 |
| | | | JP | 2019531677 A | 31-10-2019 |
| | | | KR | 20190026785 A | 13-03-2019 |
| | | | NZ | 749262 A | 28-08-2020 |
| | | | US | 2018109111 A1 | 19-04-2018 |
| | | | US | 2018131268 A1 | 10-05-2018 |
| | | | WO | 2018075710 A1 | 26-04-2018 |
| | | | ZA | 201808401 B | 27-05-2020 |
| US 2017214250 | A1 | 27-07-2017 | CA | 3011738 A1 | 03-08-2017 |
| | | | US | 2017214250 A1 | 27-07-2017 |
| | | | WO | 2017132113 A1 | 03-08-2017 |
| WO 2022166289 | A1 | 11-08-2022 | AU | 2021426006 A1 | 07-09-2023 |
| | | | CN | 112821455 A | 18-05-2021 |
| | | | EP | 4290726 A1 | 13-12-2023 |
| | | | US | 2024088656 A1 | 14-03-2024 |
| | | | WO | 2022166289 A1 | 11-08-2022 |
| CN 111130102 | B | 03-09-2021 | NONE | | |
| US 9454137 | B2 | 27-09-2016 | NONE | | |

EPO FORM P0459

For more details about this annex : see Official Journal of the European Patent Office, No. 12/82